(19) Europäisches Patentamt
European Patent Office
Office européen des brevets

(11) **EP 3 051 873 A1**

(12) **EUROPEAN PATENT APPLICATION**
published in accordance with Art. 153(4) EPC

(43) Date of publication:
**03.08.2016 Bulletin 2016/31**

(21) Application number: **13895898.8**

(22) Date of filing: **25.10.2013**

(51) Int Cl.:
***H04W 28/24*** *(2009.01)*

(86) International application number:
**PCT/CN2013/085947**

(87) International publication number:
**WO 2015/058401 (30.04.2015 Gazette 2015/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
- **YAN, Zhiyu**
  **Shenzhen**
  **Guangdong 518129 (CN)**
- **MA, Sha**
  **Shenzhen**
  **Guangdong 518129 (CN)**

(74) Representative: **Maiwald Patentanwalts GmbH**
**Engineering**
**Elisenhof**
**Elisenstrasse 3**
**80335 München (DE)**

(54) **DATA SCHEDULING METHOD, DEVICE, BASE STATION AND TERMINAL**

(57) The present invention discloses a data scheduling method and apparatus, where the method includes: first, configuring a data scheduling granularity for a first wireless communications system on a carrier on a specific frequency spectrum; then, indicating an option of the data scheduling granularity to a terminal; finally, performing data scheduling for the terminal according to the data scheduling granularity indicated in the option of the data scheduling granularity, and indicating a corresponding data scheduling result to the terminal. Therefore, by means of the foregoing configured data scheduling granularity for the wireless communications system on the carrier on the specific frequency spectrum, when a specific frequency spectrum resource is used between systems, objectives of more even distribution and more use of a system resource are achieved.

```
┌─────────────────────────────────────────────────────────────┐
│  Configure a data scheduling granularity for a first wireless │  ⎫ S101
│  communications system on a specific frequency spectrum       │
└─────────────────────────────────────────────────────────────┘
                              │
                              ▼
┌─────────────────────────────────────────────────────────────┐
│  Indicate an option of the data scheduling granularity on     │  ⎫ S102
│  some or all carriers on the specific frequency spectrum to    │
│  a terminal                                                    │
└─────────────────────────────────────────────────────────────┘
                              │
                              ▼
┌─────────────────────────────────────────────────────────────┐
│  Perform data scheduling for the terminal according to the     │  ⎫ S103
│  configured data scheduling granularity on the specific        │
│  frequency spectrum, and indicate a corresponding data         │
│  scheduling result to the terminal                             │
└─────────────────────────────────────────────────────────────┘
```

FIG. 5

EP 3 051 873 A1

**Description**

**TECHNICAL FIELD**

The present invention relates to the field of wireless communications technologies, and more specifically, to a data scheduling method and apparatus, a base station, and a terminal.

**BACKGROUND**

A frequency spectrum is a basis of wireless communication, and from a perspective of application, the frequency spectrum is classified into an unlicensed spectrum and a licensed spectrum. According to a newly released international frequency spectrum white paper, there will be more unlicensed spectrum resources than licensed spectrum resources. Currently, a major technology used on the unlicensed spectrum is a Wireless Fidelity (Wireless Fidelity, WiFi) technology, and another wireless communications technology such as a Long Term Evolution (Long Term Evolution, LTE) technology is used on the licensed spectrum.

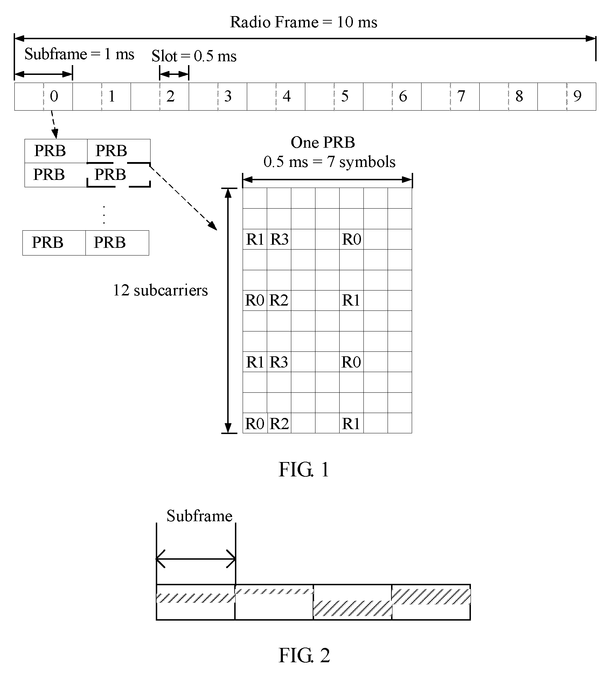

As shown in FIG. 1, FIG. 1 shows a case of resource scheduling, between an LTE system and a WiFi system, occurring on a shared frequency spectrum within a time of one LTE radio frame. Within the time range, 10 subframes of the LTE system are included, and a frequency domain width is 20 MHz. During uplink and downlink data transmission, within time of Subframe#0 and Subframe#1, the LTE system occupies system resources to schedule user data. A scheduling granularity TTI for the LTE in a time domain is 1 ms, that is, the LTE performs user scheduling once per 1 ms in the time domain. Therefore, within the time of a total 2 ms of Subframe#0 and Subframe#1, because the LTE uses the system resources, a result of listening to usage of the system resources by the WiFi system is that the resources cannot be used in this period until after scheduling of the user data by the LTE system ends at Subframe#1, When the frequency resources become available, a status of the resources of being available can be listened to by a WiFi user. Within a time range of Subframe#2, WiFi user data is scheduled. As shown in FIG. 1, the scheduling ends during Subframe#3. Because scheduled user data of the LTE system starts from a start location of a subframe, a next opportunity to schedule user data by the LTE system can start only from Subframe#4. Therefore, some resources in Subframe#3 are not used.

It can be learned from the foregoing description that, physical resources between wireless communications systems are allocated in different manners, and during transmission of scheduled user data, resources scheduled by the systems also have different sizes, which causes a problem that during data transmission, when a specific frequency spectrum resource is shared between the systems, transmission opportunities are unevenly distributed and system resources are not fully used.

**SUMMARY**

In view of this, an objective of embodiments of the present invention is to provide a data scheduling method and apparatus, a base station, and a terminal, to resolve a problem in the prior art that during data transmission, when a specific frequency spectrum resource is shared between the systems, transmission opportunities are unevenly distributed, and system resources are not fully used, where the problem is caused by different allocation manners of physical resources between wireless communications systems and different sizes of resources scheduled by a system.

To achieve the foregoing objective, the embodiments of the present invention provide the following technical solutions:

A first aspect of an embodiment of the present invention provides a data scheduling method, applied to a base station, including:

configuring a data scheduling granularity in a time domain and in a frequency domain for a first wireless communications system on a carrier on a specific frequency spectrum;
indicating an option of the configured data scheduling granularity on some or all carriers on the specific frequency spectrum to a terminal; and
performing data scheduling for the terminal according to the configured data scheduling granularity on the carrier on the specific frequency spectrum, and indicating a data scheduling result obtained after the data scheduling to the terminal.

In a first implementation manner of the first aspect in this embodiment of the present invention, the configuring a data scheduling granularity in a time domain and in a frequency domain for a first wireless communications system on a carrier on a specific frequency spectrum includes:

determining whether a second wireless communications system applied on the carrier on the specific frequency spectrum exists; and
when no second wireless communications system applied on the carrier on the specific frequency spectrum exists, configuring the data scheduling granularity in the time domain and in the frequency domain for the first wireless communications system on the carrier on the specific frequency spectrum, where
in the time domain, an effective length of the data scheduling for the first wireless communications system is duration of an available shared data channel in a data scheduling period; and
in the frequency domain, an effective length of the data scheduling for the first wireless communications system is a frequency domain width of one physical resource block, where
the first wireless communications system is a Long Term Evolution LTE system.

**[0009]** In a second implementation manner of the first aspect in this embodiment of the present invention, the configuring a data scheduling granularity in a time domain and in a frequency domain for a first wireless communications system on a carrier on a specific frequency spectrum includes:

determining whether a second wireless communications system applied on the carrier on the specific frequency spectrum exists; and
when the second wireless communications system applied on the carrier on the specific frequency spectrum exists, configuring the data scheduling granularity in the time domain and in the frequency domain on the carrier on the specific frequency spectrum, where
in the time domain, an effective length of the data scheduling for the first wireless communications system is a time domain length of one orthogonal frequency division multiplexing OFDM symbol; and
in the frequency domain, an effective length of the data scheduling for the first wireless communications system is S times bandwidth of an available shared data channel in a data scheduling period, where S is a numerical value that is greater than 0 and less than or equal to 1; and
the first wireless communications system is an LTE system, and the second wireless communications system is a Wireless Fidelity WiFi system.

**[0010]** In a third implementation manner of the first aspect in this embodiment of the present invention, the configuring a data scheduling granularity in a time domain and in a frequency domain for a wireless communications system on a carrier on a specific frequency spectrum includes:

determining whether a second wireless communications system applied on the carrier on the specific frequency spectrum exists;
when the second wireless communications system applied on the carrier on the specific frequency spectrum exists, configuring a data scheduling granularity in the time domain and in the frequency domain for the first wireless communications system on a carrier on a shared specific frequency spectrum of the specific frequency spectrum, where
in the time domain, an effective length of the data scheduling for the first wireless communications system is a time domain length of one OFDM symbol; and
in the frequency domain, an effective length of the data scheduling for the first wireless communications system is S times bandwidth of an available shared data channel in a data scheduling period, where S is a numerical value that is greater than 0 and less than or equal to 1; and
configuring a data scheduling granularity in the time domain and in the frequency domain for the first wireless communications system on a carrier on a non-shared specific frequency spectrum of the specific frequency spectrum, where
in the time domain, an effective length of the data scheduling for the first wireless communications system is duration of an available shared data channel in a data scheduling period; and
in the frequency domain, an effective length of the data scheduling for the first wireless communications system is a frequency domain width of one physical resource block, where
the first wireless communications system is an LTE system, and the second wireless communications system existing on the specific frequency spectrum is a WiFi system.

**[0011]** In a fourth implementation manner of the first aspect in this embodiment of the present invention, the indicating an option of the configured data scheduling granularity on some or all carriers on the specific frequency spectrum to a terminal includes:

acquiring, from the option of the data scheduling granularity, the data scheduling granularity in the time domain

and/or in the frequency domain for the first wireless communications system on the specific frequency spectrum; and indicating the data scheduling granularity in the time domain and/or in the frequency domain to the terminal by using scheduling information on the carrier on the shared specific frequency spectrum; or

indicating the data scheduling granularity in the time domain and/or in the frequency domain to the terminal by using scheduling information on a carrier on another frequency spectrum than the carrier on the shared specific frequency spectrum.

In a fifth implementation manner of the first aspect in this embodiment of the present invention, the indicating an option of the configured data scheduling granularity on some or all carriers on the specific frequency spectrum to a terminal includes:

when the option of the data scheduling granularity is the data scheduling granularity in the time domain and in the frequency domain for the first wireless communications system on the carrier on the shared specific frequency spectrum of the specific frequency spectrum, indicating the data scheduling granularity to the terminal by using scheduling information on the carrier on the shared specific frequency spectrum, or scheduling information on a carrier on another frequency spectrum than the carrier on the shared specific frequency spectrum, where a condition for not sending an indication to the terminal is that the option of the data scheduling granularity is the data scheduling granularity in the time domain and in the frequency domain for the first wireless communications system on the carrier on the non-shared specific frequency spectrum of the specific frequency spectrum.

In a sixth implementation manner of the first aspect in this embodiment of the present invention, the performing data scheduling for the terminal according to the configured data scheduling granularity on the carrier on the specific frequency spectrum includes:

performing data scheduling for the terminal according to the data scheduling granularity that the effective length in the time domain is the duration of the available shared data channel in the data scheduling period, and/or according to the scheduling granularity of the frequency domain width of one resource block in the frequency domain, and acquiring a corresponding data scheduling result.

In a seventh implementation manner of the first aspect in this embodiment of the present invention, the performing data scheduling for the terminal according to the configured data scheduling granularity on the carrier on the specific frequency spectrum includes:

performing data scheduling for the terminal according to the data scheduling granularity that the effective length in the frequency domain is S times the bandwidth of the available shared data channel in the data scheduling period, and/or according to the data scheduling granularity that the effective length in the time domain is the time domain length of one OFDM symbol, and acquiring a corresponding data scheduling result.

In an eighth implementation manner of the first aspect in this embodiment of the present invention, the performing data scheduling for the terminal according to the configured data scheduling granularity on the carrier on the specific frequency spectrum includes:

on the non-shared specific frequency spectrum of the specific frequency spectrum, performing data scheduling for the terminal according to the data scheduling granularity that the effective length in the time domain is the duration of the available shared data channel in the data scheduling period, and/or according to the scheduling granularity of the frequency domain width of one resource block in the frequency domain, and acquiring a corresponding data scheduling result; and on the non-shared specific frequency spectrum of the specific frequency spectrum, performing data scheduling for the terminal according to the data scheduling granularity that the effective length in the frequency domain is S times the bandwidth of the available shared data channel in the data scheduling period, and/or according to the data scheduling granularity that the effective length in the time domain is the time domain length of one OFDM symbol, and acquiring a corresponding data scheduling result.

In a ninth implementation manner of the first aspect in this embodiment of the present invention, the indicating a corresponding data scheduling result to the terminal includes:

indicating the data scheduling result of the shared specific frequency spectrum to the terminal according to scheduling information on the non-shared specific frequency spectrum; or
indicating the data scheduling result of the shared specific frequency spectrum to the terminal according to scheduling information on the shared specific frequency spectrum.

In a tenth implementation manner of the first aspect in this embodiment of the present invention, the indicating a corresponding data scheduling result to the terminal includes:

when configured data scheduling granularities on carriers on the specific frequency spectrum are different, using a same resource scheduling field of the scheduling information to represent the data scheduling result indicated to the terminal.

In an eleventh implementation manner of the first aspect in this embodiment of the present invention, after the indicating a corresponding data scheduling result to the terminal, the method further includes:

performing data scheduling for the terminal according to the configured data scheduling granularity;
acquiring the scheduled data, and mapping, to each data scheduling granularity of the scheduled data, a demodulation reference signal required for demodulating the scheduled data; and
performing data transmission with the terminal according to a demodulation result, where
resource mapping is performed on the demodulation reference signal according to the configured data scheduling granularity for the first wireless communications system on the carrier on the specific frequency spectrum.

A second aspect of an embodiment of the present invention provides a data scheduling method, applied to a terminal, including:

receiving an option, indicated by a base station, of a data scheduling granularity on some or all carriers on a specific frequency spectrum, where the option of the data scheduling granularity includes a configured data scheduling granularity in a time domain and in a frequency domain for a first wireless communications system on the carrier on the specific frequency spectrum; and
receiving a data scheduling result indicated by the base station, demodulating the data scheduling result according to a demodulation reference signal, and performing data transmission with the base station, where
resource mapping is performed on the demodulation reference signal according to the configured data scheduling granularity for the first wireless communications system on the carrier on the specific frequency spectrum.

In a first implementation manner of the second aspect in this embodiment of the present invention, the receiving a data scheduling result indicated by the base station includes:

receiving the data scheduling result for the first wireless communications system on the specific frequency spectrum according to scheduling information on a carrier on the shared specific frequency spectrum; or
receiving the data scheduling result for the first wireless communications system on the specific frequency spectrum according to scheduling information on a carrier on another spectrum than a carrier on the shared specific frequency spectrum.

In a second implementation manner of the second aspect in this embodiment of the present invention, the receiving the data scheduling result for the first wireless communications system on the specific frequency spectrum according to scheduling information on a carrier on the shared specific frequency spectrum includes:

performing blind detection on a physical downlink control channel in at least one OFDM symbol, to acquire the scheduling information on the specific frequency spectrum; and
receiving the data scheduling result for the first wireless communications system on the specific frequency spectrum according to the scheduling information on the carrier on the shared specific frequency spectrum.

A third aspect of an embodiment of the present invention provides a data scheduling apparatus, applied to a base station side, including:

a configuration unit, configured to configure a data scheduling granularity in a time domain and in a frequency domain for a first wireless communications system on a carrier on a specific frequency spectrum, and send the data scheduling granularity to an indication unit;
the indication unit, configured to: indicate an option of the data scheduling granularity on some or all carriers on the specific frequency spectrum to a terminal, and send the data scheduling granularity to a data scheduling unit; and the data scheduling unit, configured to perform data scheduling for the terminal according to the data scheduling granularity indicated in the option of the data scheduling granularity, and indicate a corresponding data scheduling result to the terminal.

In a first implementation manner of the third aspect in this embodiment of the present invention, the apparatus further includes:

the first data transmission unit, configured to receive the data scheduling granularity sent by the configuration unit and the data scheduling result sent by the data scheduling unit, acquire a demodulation reference signal mapped to each data scheduling granularity for scheduled data, demodulate the scheduled data according to the demodulation reference signal, and perform data transmission with the terminal, where resource mapping is performed on the demodulation reference signal according to the data scheduling granularity output by the configuration unit.

In a second implementation manner of the third aspect in this embodiment of the present invention, the configuration unit includes:

a detection module, configured to detect whether a second wireless communications system applied on the carrier on the specific frequency spectrum exists, and when no second wireless communications system applied on the carrier on the specific frequency spectrum exists, execute a first configuration module; and
the first configuration module, configured to configure a data scheduling granularity that in the time domain, an effective length of the first wireless communications system is duration of an available shared data channel in a data scheduling period, and in the frequency domain, an effective length of the first wireless communications system is a frequency domain width of one resource block.

In a third implementation manner of the third aspect in this embodiment of the present invention, the configuration unit includes:

a detection module, configured to detect whether a second wireless communications system applied on the carrier on the specific frequency spectrum exists, and when the second wireless communications system applied on the carrier on the specific frequency spectrum exists, execute a second configuration module or a third configuration module; and
the second configuration module, configured to configure a data scheduling granularity that in the time domain, an effective length of the data scheduling for the first wireless communications system is a time domain length of one OFDM symbol, and in the frequency domain, an effective length of the data scheduling for the first wireless communications system is S times bandwidth of an available shared data channel in a data scheduling period, where S is a numerical value that is greater than 0 and less than or equal to 1; or
the third configuration module, configured to configure a data scheduling granularity in the time domain and in the frequency domain for the first wireless communications system on a carrier on a shared specific frequency spectrum of the specific frequency spectrum, where in the time domain, an effective length of the data scheduling for the first wireless communications system is a time domain length of one OFDM symbol, and in the frequency domain, an effective length of the data scheduling for the first wireless communications system is S times bandwidth of an available shared data channel in a data scheduling period, where S is a numerical value that is greater than 0 and less than or equal to 1.

In a fourth implementation manner of the third aspect in this embodiment of the present invention, the indication unit includes:

an acquisition module, configured to acquire, from the option of the data scheduling granularity, the data scheduling granularity in the time domain and/or in the frequency domain for the first wireless communications system on the carrier on the specific frequency spectrum; and
a first indication module, configured to: indicate the data scheduling granularity in the time domain and/or in the frequency domain to the terminal by using scheduling information on the carrier on the shared specific frequency spectrum, and send the data scheduling granularity to the data scheduling unit; or
a second indication module, configured to: indicate the data scheduling granularity in the time domain and/or in the frequency domain to the terminal by using scheduling information on a carrier on another spectrum than the carrier on the shared specific frequency spectrum, and send the data scheduling granularity to the data scheduling unit.

In a fifth implementation manner of the third aspect in this embodiment of the present invention, the data scheduling unit includes:

a first data scheduling module, configured to: perform data scheduling for the terminal according to the data scheduling granularity that in the time domain, the effective length of the data scheduling for the first wireless communications system is the duration of the available shared data channel in the data scheduling period, and in the frequency domain, the effective length of the data scheduling for the first wireless communications system is the frequency domain width of one resource block PRB, and acquire a corresponding data scheduling result; and

a second indication module, configured to: indicate the data scheduling result of the shared specific frequency spectrum of the specific frequency spectrum to the terminal by using scheduling information on the non-shared specific frequency spectrum; or indicate the data scheduling result of the shared specific frequency spectrum to the terminal by using scheduling information on the shared specific frequency spectrum, and send the data scheduling result to the first data transmission unit, where

the scheduling information on the non-shared specific frequency spectrum or shared specific frequency spectrum is a physical downlink control channel PDCCH instruction or an enhanced physical downlink control channel E-PDCCH instruction.

In a sixth implementation manner of the third aspect in this embodiment of the present invention, when the second configuration module is used for configuration, the data scheduling unit includes:

a second data scheduling module, configured to: perform data scheduling for the terminal according to the data scheduling granularity that S times the bandwidth of the available shared data channel in the data scheduling period is used as the effective length in the frequency domain, and/or according to the data scheduling granularity that the effective length in the time domain is indicated by using the scheduling information, and acquire a corresponding data scheduling result; and

a third indication module, configured to: indicate the data scheduling result on a secondary cell on the shared frequency spectrum to the terminal by using scheduling information on a primary cell on an LTE non-shared frequency spectrum, or indicate the data scheduling result on a secondary cell on the shared frequency spectrum to the terminal by using scheduling information on a secondary cell on an LTE shared frequency spectrum, and send the data scheduling result to the first data transmission unit.

In a seventh implementation manner of the third aspect in this embodiment of the present invention, when the third configuration module is used for configuration, the data scheduling unit includes:

a third data scheduling module, configured to: perform data scheduling for the terminal according to the data scheduling granularity in the time domain and in the frequency domain on the carrier on the shared specific frequency spectrum of the specific frequency spectrum, or the data scheduling granularity in the time domain and in the frequency domain on the carrier on the non-shared specific frequency spectrum of the specific frequency spectrum, and acquire a corresponding data scheduling result; and

a fourth indication module, configured to: indicate the data scheduling result of the shared specific frequency spectrum to the terminal by using scheduling information on the non-shared specific frequency spectrum; or indicate the data scheduling result of the shared specific frequency spectrum to the terminal by using scheduling information on the shared specific frequency spectrum, and send the data scheduling result to the first data transmission unit.

In an eighth implementation manner of the third aspect in this embodiment of the present invention, the data scheduling unit further includes:

a unified format module, configured to: when data scheduling is performed for the terminal according to different data scheduling granularities, for the first wireless communications system on the specific frequency spectrum, indicated in the option of the data scheduling granularity, use a same resource scheduling field of the scheduling information to represent the data scheduling result.

A fourth aspect of an embodiment of the present invention provides a base station, including:

a memory with a storage medium, where the memory stores a program in which base station side performs data scheduling; and

a processor connected to the memory by using a bus, where the processor executes the program by using the data scheduling method provided in the foregoing embodiments of the present invention.

A fifth aspect of an embodiment of the present invention provides a data scheduling apparatus, applied to a terminal in a wireless communications system, where the apparatus includes:

a receiving unit, configured to receive an option of a data scheduling granularity indicated by a base station, where the option of the data scheduling granularity includes a configured data scheduling granularity for a first wireless communications system on a carrier on a specific frequency spectrum, and the specific frequency spectrum includes a shared specific frequency spectrum and a non-shared specific frequency spectrum; and

a second data transmission unit, configured to receive a data scheduling result indicated by the base station, demodulate the data scheduling result according to a demodulation reference signal, and perform data transmission with the base station, where resource mapping is performed on the demodulation reference signal according to the configured data scheduling granularity for the first wireless communications system on the specific frequency spectrum.

In a first implementation manner of the fifth aspect in this embodiment of the present invention, the second data transmission unit includes:

a first receiving module, configured to receive the data scheduling result for the first wireless communications system on the carrier on the specific frequency spectrum according to scheduling information on the shared specific frequency spectrum; or

a second receiving module, configured to receive the data scheduling result for the first wireless communications system on the carrier on the specific frequency spectrum according to scheduling information on a carrier on another spectrum than the shared specific frequency spectrum.

In a second implementation manner of the fifth aspect in this embodiment of the present invention, the first receiving module includes:

a blind detection module, configured to perform blind detection on a physical downlink control channel in at least one OFDM symbol, to acquire the scheduling information on the specific frequency spectrum.

A sixth aspect of an embodiment of the present invention provides a terminal, including:

a memory with a storage medium, where the memory stores a program in which data scheduling is performed on a terminal side; and

a processor connected to the memory by using a bus, where the processor executes the program by using the data scheduling method provided in the foregoing embodiments of the present invention.

It can be learned from the foregoing technical solutions that, compared with the prior art, the embodiments of the present invention disclose a data scheduling method and apparatus, a base station, and a terminal. According to the method, a data scheduling granularity for a wireless communications system on a carrier on each specific frequency spectrum is configured; when a specific frequency spectrum is shared with another wireless communications system, data scheduling is performed for a terminal by using the configured data scheduling granularity on the carrier on the specific frequency spectrum; and a data scheduling result on the carrier on the specific frequency spectrum is indicated to the terminal. The data scheduling granularity for the wireless communications system on the carrier on each specific frequency spectrum is configured; therefore, when a carrier resource on the specific frequency spectrum is used between systems, objectives of more even distribution and more use of a system resource are achieved.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show merely the embodiments of the present invention, and a person of ordinary skill in the art may still derive other drawings from these accompanying drawings without creative efforts.

FIG. 1 is a schematic diagram of frequency spectrum usage during data transmission performed by an LTE system and a WiFi system on a shared specific frequency spectrum;
FIG. 2 is a definition diagram of a PRB for an LTE system;
FIG. 3 is a schematic diagram of frequency spectrum usage obtained after an LTE system performs data scheduling on a licensed spectrum;

FIG. 4 is a schematic diagram of frequency spectrum usage obtained after a WiFi system performs data scheduling on an unlicensed spectrum;

FIG. 5 is a flowchart of a data scheduling method according to Embodiment 1 of the present invention;

FIG. 6 is a flowchart of a data scheduling method according to Embodiment 2 of the present invention;

FIG. 7 is a schematic diagram of a manner of indicating a data scheduling result to a terminal according to Embodiment 3 of the present invention;

FIG. 8 is a schematic diagram of another manner of indicating a data scheduling result to a terminal according to Embodiment 3 of the present invention;

FIG. 9 is a schematic diagram of resource occupation, within a TTI scheduling period in a wireless communications system, obtained after a data scheduling result is indicated to a terminal according to Embodiment 3 of the present invention;

FIG. 10 is a schematic diagram of data scheduling performed, on a terminal, based on a data scheduling granularity according to Embodiment 3 of the present invention;

FIG. 11 is a schematic diagram of data scheduling performed, on a terminal, based on another data scheduling granularity according to Embodiment 3 of the present invention;

FIG. 12 is a schematic diagram of data scheduling performed, on a terminal, based on another data scheduling granularity according to Embodiment 3 of the present invention;

FIG. 13 is a schematic diagram of a resource mapping manner of a demodulation reference signal according to Embodiment 3 of the present invention;

FIG. 14 is a flowchart of a data scheduling method according to Embodiment 4 of the present invention;

FIG. 15 is a schematic structural diagram of a radio frame obtained after an LTE system and a WiFi system share a specific frequency spectrum resource according to Embodiment 4 of the present invention;

FIG. 16 is a schematic structural diagram of a data scheduling apparatus according to Embodiment 5 of the present invention;

FIG. 17 is a schematic structural diagram of a base station according to Embodiment 5 of the present invention;

FIG. 18 is a schematic structural diagram of a data scheduling apparatus according to Embodiment 6 of the present invention; and

FIG. 19 is a schematic structural diagram of a terminal according to Embodiment 6 of the present invention.

## DESCRIPTION OF EMBODIMENTS

For reference and clarity, descriptions, abbreviations, or acronyms of technical terms used in the following content are summarized as follows:

UE: User Equipment, user equipment; WiFi: Wireless Fidelity, Wireless Fidelity;

eNB: evolved Node B, evolved NodeB;

OFDM: Orthogonal Frequency Division Multiplexing, orthogonal frequency division multiplexing;

Subframe: subframe; LTE: Long Term Evolution, Long Term Evolution;

PRB: Physical Resource Block, resource block;

PDSCH: Physical Downlink/Uplink Shared Channel, physical downlink shared channel;

PDCCH: Physical Downlink Control Channel, physical downlink control channel;

E-PDCCH: enhanced physical downlink control channel; TTI: scheduling granularity; and

Primary cell: primary cell; Secondary cell: secondary cell.

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the prior art, during data transmission, an LTE system forms uplink/downlink physical resources in a time domain and in a frequency domain into a resource block (PRB), and uses the PRB as a physical resource unit for scheduling and allocation. As shown in FIG. 2, one PRB includes 12 consecutive subcarriers (a quantity of subcarriers in one PRB is denoted as $N_{SC}^{RB}$) in the frequency domain, and includes 7 consecutive orthogonal frequency division multiplexing (OFDM) symbols (6 symbols in a case of Extended CP) in the time domain. That is, a frequency domain width $\Delta f$ of a PRB is 180 kHz, and a time domain length of a PRB is 0.5 ms. R0 in FIG. 2 refers to a pilot symbol of an antenna 0, R1 is a pilot symbol of an antenna 1, R2 is a pilot symbol of an antenna 2, and R4 is a pilot symbol of an antenna 3.

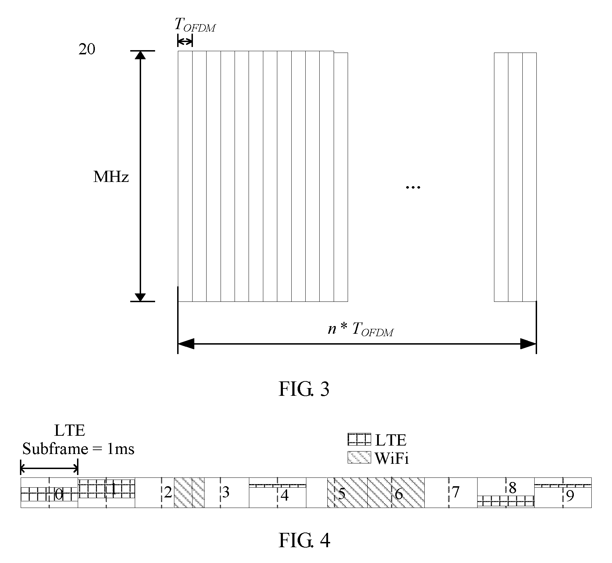

During downlink transmission of an LTE Rel-8/9/10 communications system, an evolved NodeB (eNB) sends, to each scheduled user equipment (UE) according to a scheduling result, a physical downlink/uplink shared channel (PDSCH/PUSCH) and a physical downlink control channel (PDCCH) corresponding to the PDSCH/PUSCH; the PDCCH and the PDSCH are time-division multiplexed in a subframe (Subframe). Therefore, in the LTE system, scheduling on the UE at a time is 1 ms in the time domain, and is generally $n * N_{SC}^{RB}$ ($n \leq N_{RB}^{DL}$ or $n \leq N_{RB}^{UL}$) in the frequency domain, where $N_{RB}^{DL}$ and $N_{RB}^{UL}$ are a quantity of downlink PRBs and a quantity of uplink PRBs respectively. An oblique-line part shown in FIG. 3 is a schematic diagram of frequency spectrum usage obtained after an LTE system performs data scheduling on a licensed spectrum.

During data transmission, a WiFi system schedules transmission resources of uplink and downlink data for a user by using an RTS/CTS protocol. The WiFi uses an OFDM modulation scheme, and a length of one OFDM symbol is four microseconds. After usage of system resources is listened to, as shown in FIG. 4, a frequency domain resource occupied in a data transmission process by UE is $W_{DL}$, which is a width of an entire frequency spectrum resource (20 MHz shown in FIG. 4), and a time domain resource is $n*T_{OFDM}$, where $T_{OFDM}$ is a time length of one OFDM symbol, and a size of n depends on a size of a to-be-transmitted data packet, a channel status of the user, and the like.

It can be learned from the background that, based on different data processing manners of the LTE system and the WiFi system during data transmission, in a process of data transmission between the LTE system and the WiFi system, a problem that transmission opportunities are unevenly distributed and system resources are not fully used occurs when carrier resources on a specific frequency spectrum are shared between the systems. According to the requirement, the embodiments of the present invention disclose a data scheduling method and apparatus, a base station, and a terminal. Specific content is described in detail by using the following embodiments.

A core idea of the embodiments of the present invention is as follows: On a base station side, before data transmission, a data scheduling granularity for a first wireless communications system on a carrier on a specific frequency spectrum is configured, and during data transmission, data scheduling is performed for a terminal by using the configured data scheduling granularity on the carrier on the specific frequency spectrum, and a data scheduling result is indicated to the terminal; on a terminal side, a data scheduling granularity configured by a base station for a first wireless communications system on a carrier on a specific frequency spectrum, and a data scheduling message of the base station are acquired, and a data scheduling result is acquired according to the data scheduling granularity and the data scheduling message. Details are specifically described in the following embodiments.

**Embodiment 1**

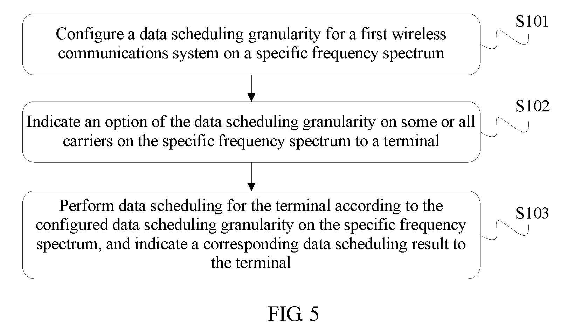

As shown in FIG. 5, FIG. 5 is a flowchart of a data scheduling method according to an embodiment of the present invention. The data scheduling method is applied to a base station, and mainly includes the following steps:

> Step S101: The base station configures a data scheduling granularity in a time domain and in a frequency domain for a first wireless communications system on a carrier on a specific frequency spectrum.

In step S101, the base station specifically configures the data scheduling granularity in the time domain and in the frequency domain for the first wireless communications system on the carrier on the specific frequency spectrum. Specifically, the carrier on the specific frequency spectrum includes a carrier on a shared specific frequency spectrum and a carrier on a non-shared specific frequency spectrum, where the shared specific frequency spectrum is corresponding to a carrier, in multiple carriers, allowed to be shared between different wireless communications systems, and the non-shared specific frequency spectrum is corresponding to a carrier, in multiple carriers, on which communication is allowed to be performed only by a specific wireless communications system.

During configuration, on the carrier on the shared specific frequency spectrum of the specific frequency spectrum, the data scheduling granularity of the carrier on the shared specific frequency spectrum is configured in the time domain and in the frequency domain for the current first wireless communications system, so that the data scheduling granularity, in the time domain and in the frequency domain, on the carrier on the shared specific frequency spectrum is closer to a data scheduling granularity for a second wireless communications system that shares the frequency spectrum resource, and resource sharing on the shared specific frequency spectrum is performed more fully and properly between the first wireless communications system and the second wireless communications system. On the carrier on the non-shared specific frequency spectrum of the specific frequency spectrum, the base station may configure the data scheduling granularity for the first wireless communications system on the carrier on the specific frequency spectrum in a default configuration manner or in an allocation manner used when a specific frequency spectrum resource is shared.

Step S102: The base station indicates an option of the data scheduling granularity on some or all carriers on the specific frequency spectrum to a terminal.

In step S102, the option of the data scheduling granularity includes a configured data scheduling granularity in the time domain and in the frequency domain for the first wireless communications system on the some or all carriers on the specific frequency spectrum. When step S102 is performed, the data scheduling granularity in the frequency domain and/or in the time domain on the some or all carriers on the specific frequency spectrum are indicated to the terminal by using the option of the data scheduling granularity.

Through an indication in step S102, the terminal may determine a manner of configuring, in step S101, the data scheduling granularity for the first wireless communications system on the carrier on the specific frequency spectrum.

Step S103: The base station performs data scheduling for the terminal according to the configured data scheduling granularity on the carrier on the specific frequency spectrum, and indicates a data scheduling result obtained after the data scheduling to the terminal.

In step S103, the base station performs data scheduling for the terminal according to a type of the configured data scheduling granularity on the carrier on the specific frequency spectrum in step S101, and acquires the corresponding data scheduling result. That is, for the carriers, in step S101, for which a default data scheduling granularity configuration manner is used, the base station performs, on the carriers, data scheduling for the terminal in an existing manner; for the carriers, in step S101, for which another data scheduling granularity configuration manner existing when a specific frequency spectrum resource is shared with another system is used, the base station performs, on the carriers, data scheduling for the terminal according to a new data scheduling granularity obtained after configuration.

In this embodiment of the present invention, a data scheduling granularity for a first wireless communications system on a carrier on a specific frequency spectrum is configured, so that the data scheduling granularity in a time domain and in a frequency domain on the carrier on the specific frequency spectrum is closer to a data scheduling granularity for a coexisting second wireless communications system; data scheduling is performed for a terminal by using the configured data scheduling granularity on the carrier on the specific frequency spectrum; and finally, a corresponding data scheduling result is indicated to the terminal. Based on the foregoing configuration manner, when a specific frequency spectrum resource is used between systems in the specific frequency spectrum, objectives of more even allocation and more use of a system resource are achieved.

**Embodiment 2**

For the data scheduling method disclosed in Embodiment 1 of the present invention, in a process of performing step S101 shown in FIG. 1, when a data scheduling granularity for a first wireless communications system on a carrier on a specific frequency spectrum is configured, that is, when a data scheduling granularity in a time domain and in a frequency domain for the first wireless communications system on the carrier on the specific frequency spectrum is configured, according to a status of the first wireless communications system existing on the carrier on the specific frequency spectrum, configuration may be performed in two manners, so that data scheduling granularities are obtained after configuration is performed in two different manners.

In a first manner, there is no second wireless communications system applied on the carrier on the specific frequency spectrum. In this case, it is determined that a default data scheduling granularity for the first wireless communications system is used on all carriers on the specific frequency spectrum.

In a second manner, when a second wireless communications system applied on the carrier on the specific frequency spectrum exists, there are two situations. In a first situation, a same data scheduling granularity that is different from default configuration for the first wireless communications system is determined to be configured on all carriers in the specific frequency spectrum. In a second situation, a data scheduling granularity on a carrier on a shared specific frequency spectrum of the specific frequency spectrum is determined, where the data scheduling granularity is different from a default data scheduling granularity for the first wireless communications system; a default configuration manner is used on a carrier on a non-shared specific frequency spectrum of the specific frequency spectrum, that is, the default scheduling granularity for the first wireless communications system is used. In Embodiment 2 of the present invention, a configured data scheduling granularity is described with reference to the two manners.

In the first manner, when the data scheduling granularity in the time domain and in the frequency domain for the first wireless communications system is configured on the carrier on the specific frequency spectrum, when the carrier on the specific frequency spectrum includes only a carrier on a non-shared specific frequency spectrum, only an LTE system exists, and no second wireless communications system exist, a used configuration manner is as follows:

For data scheduling for the current LTE system (the LTE system is the first wireless communications system), a data scheduling granularity for the LTE is an existing scheduling granularity PRB for the LTE. That is, in the time domain, an effective length of the data scheduling granularity for the LTE is duration of an available shared data channel in a data scheduling period; in the frequency domain, an effective length of the data scheduling granularity for the LTE is a frequency domain width of one PRB.

The foregoing configuration may be a default data scheduling granularity in the specific frequency spectrum.

In the second manner, when the data scheduling granularity in the time domain and in the frequency domain for the first wireless communications system is configured on the carrier on the specific frequency spectrum, and when an LTE system and a WiFi system (the WiFi system is the second wireless communications system) coexist on the carrier on the shared specific frequency spectrum of the specific frequency spectrum, there are two cases for the used configuration manner:

In the first case, for data scheduling for the current LTE system, in the time domain, a data scheduling granularity for the LTE system is a time domain length of one OFDM symbol; in the frequency domain, an effective length of a data scheduling granularity for the LTE system is S times bandwidth of an available shared data channel in a data scheduling period, where a value of S is a numerical value that is greater than 0 and less than or equal to 1.

It should be noted that the foregoing effective length of the data scheduling granularity, in the frequency domain, for the LTE system is generally one time the bandwidth of the available shared data channel in the data scheduling period.

When the value of S is a numerical value that is greater than 0 and less than or equal to 1, the bandwidth of the available shared data channel in the data scheduling period is divided into 1/S portions according to the data scheduling granularity, and one portion of the bandwidth of the shared data channel is used as the effective length of the data scheduling granularity in the frequency domain. In addition, when the bandwidth is divided into 1/S portions, a quantity of resources in each portion is made to be an integer or be approximately equal to an integer.

In the second case:

On the carrier on the shared specific frequency spectrum of the specific frequency spectrum, for data scheduling for the current LTE system, in the time domain, a data scheduling granularity for the LTE system is a time domain length of one OFDM symbol; in the frequency domain, an effective length of a data scheduling granularity for the LTE system is S times bandwidth of an available shared data channel in a data scheduling period, where a value of S is a numerical value that is greater than 0 and less than or equal to 1.

It should be noted that the foregoing effective length of the data scheduling granularity, in the frequency domain, for the LTE system is generally one time the bandwidth of the available shared data channel in the data scheduling period.

When the value of S is a numerical value that is greater than 0 and less than or equal to 1, the bandwidth of the available shared data channel in the data scheduling period is divided into 1/S portions according to the data scheduling granularity, and one portion of the bandwidth of the shared data channel is used as an effective length of the data scheduling granularity in the frequency domain. In addition, when the bandwidth is divided into 1/S portions, a quantity of resources in each portion is made to be an integer or be approximately equal to an integer.

On the carrier on the non-shared specific frequency spectrum of the specific frequency spectrum, for each time of data scheduling for the LTE system, the data scheduling granularity for the LTE is an existing scheduling granularity PRB for the LTE. That is, in the time domain, an effective length of the data scheduling granularity for the LTE is duration of an available shared data channel in a data scheduling period; in the frequency domain, an effective length of the data scheduling granularity for the LTE is a frequency domain width of one PRB. The configuration may be a default data scheduling granularity in the specific frequency spectrum. In step S102, the base station indicates the option of the data scheduling granularity on the some or all carriers on the specific frequency spectrum to the terminal.

Specifically, when the first manner is used, the default data scheduling granularity is used on all carriers in the specific frequency spectrum, and indication may be not required. The terminal uses the default data scheduling granularity when no data scheduling granularity configuration indication on the carrier on the specific frequency spectrum is received.

When the second manner is used, in the first case, because the same data scheduling granularity that is different from the default configuration is configured on all the carriers on the specific frequency spectrum, the base station needs to indicate the option of the data scheduling granularity on all the carriers on the specific frequency spectrum to the terminal. In the second situation, because the default configuration is used on the carrier on the non-shared specific frequency spectrum of the specific frequency spectrum, indication is not required in this case. Without a data scheduling granularity configuration indication on the carrier on the non-shared specific frequency spectrum of the specific frequency spectrum, that is, the terminal uses the default data scheduling granularity on the carrier on the non-shared specific frequency spectrum of the specific frequency spectrum, it is only required that an option of a data scheduling granularity on some carriers on the shared specific frequency spectrum of the specific frequency spectrum is indicated to the terminal.

The data scheduling granularity in the time domain and in the frequency domain for the LTE system on the carrier on the specific frequency spectrum can be acquired by using the foregoing configuration, and the data scheduling granularity, for the LTE system, obtained from the foregoing configuration is as close as possible to the data scheduling granularity for the WiFi system on the carrier on the shared specific frequency spectrum, so that shared specific frequency spectrum resources are shared more fully and properly between the LTE system and the WiFi system.

Based on the foregoing two different allocation manners, at least three types of data scheduling granularities can be obtained, where a first type is the data scheduling granularity of the PRB; a second type is the data scheduling granularity that occupies one OFDM symbol in the time domain and entire bandwidth in the frequency domain; and a third type is the data scheduling granularity that occupies one OFDM symbol in the time domain and S times bandwidth in the frequency domain. More different data scheduling granularities may be obtained according to different values of S. The base station may number the foregoing at least three types of data scheduling granularities, and can send only a number to notify the terminal subsequently.

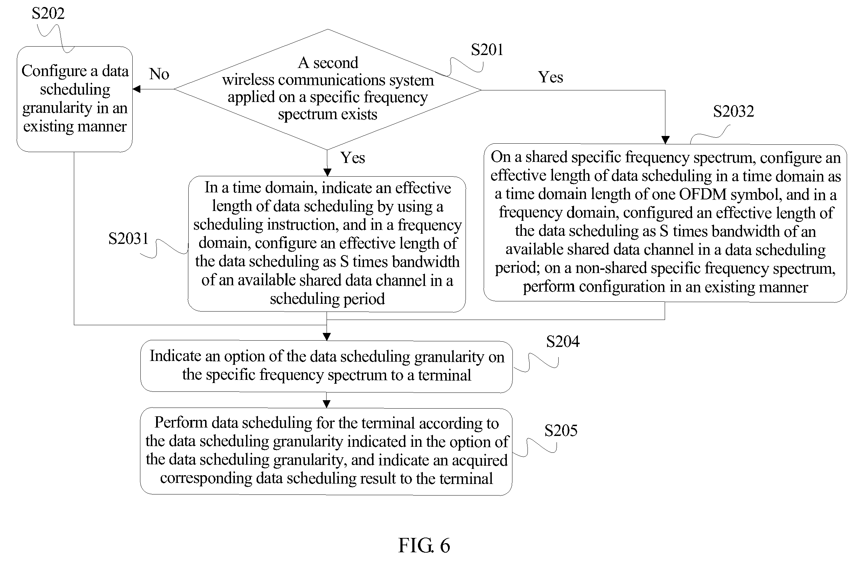

As shown in FIG. 6, FIG. 6 is a flowchart of a data scheduling method according to Embodiment 2 of the present invention, where the method mainly includes the following steps:

Step S201: A base station determines whether a second wireless communications system applied on a carrier on a specific frequency spectrum exists. If no second wireless communications system applied on the carrier on the specific frequency spectrum exists, perform step S202; if the second wireless communications system applied on the carrier on the specific frequency spectrum exists, perform step S2031 or step S2032.

In step S201, a first wireless communications system for which the base station currently needs to perform data scheduling is an LTE system.

Step S202: Configure a data scheduling granularity on the carrier on the specific frequency spectrum in an existing manner.

The configured data scheduling granularity on the carrier on the specific frequency spectrum is an existing scheduling granularity PRB for the LTE system, that is, in a time domain, an effective length of the data scheduling for the first wireless communications system is duration of an available shared data channel in a data scheduling period; in a frequency domain, an effective length of the data scheduling for the first wireless communications system is a frequency domain width of one physical resource block, where the data scheduling granularity may be a default data scheduling granularity for the first wireless communications system.

In step S202, the current first wireless communications system for which the base station performs data scheduling is the LTE system.

Step S2031: Configure a data scheduling granularity on the carrier on the specific frequency spectrum.

Specific configuration is as follows: in a time domain, an effective length of the data scheduling for the first wireless communications system is a time domain length of one OFDM symbol; in a frequency domain, an effective length of the data scheduling for the first wireless communications system is S times bandwidth of an available shared data channel in a data scheduling period, where S is a numerical value that is greater than 0 and less than or equal to 1.

The current first wireless communications system is an LTE system, and the second wireless communications system existing on the specific frequency spectrum is a WiFi system.

Step S2032: Configure a data scheduling granularity in a time domain and in a frequency domain on a carrier on a shared specific frequency spectrum of the specific frequency spectrum, where in the time domain, an effective length of the data scheduling for the first wireless communications system is a time domain length of one OFDM symbol; in the frequency domain, an effective length of the data scheduling for the first wireless communications system is S times bandwidth of an available shared data channel in a data scheduling period, where S is a numerical value that is greater than 0 and less than or equal to 1; and

configure, as an existing scheduling granularity PRB for the LTE system, a data scheduling granularity in the time domain and in the frequency domain on the carrier on a non-shared specific frequency spectrum of the specific frequency spectrum, that is, in the time domain, an effective length of the data scheduling for the first wireless communications system is duration of an available shared data channel in a data scheduling period; in the frequency domain, an effective length of the data scheduling for the first wireless communications system is a frequency domain width of one PRB, where the data scheduling granularity may be a default data scheduling granularity for the first wireless communications system.

The current first wireless communications system is an LTE system, and the second wireless communications system existing on the carrier on the specific frequency spectrum is a WiFi system.

By means of the foregoing configuration, the data scheduling granularity for the LTE system is as close as possible to a data scheduling granularity for the WiFi system, so that when the LTE system is applied on the shared specific frequency spectrum, the LTE system may not only effectively use a shared specific frequency spectrum resource, but also provide more effective wireless access and meet an increasing requirement for a mobile broadband service.

Step S204: Indicate an option of the configured data scheduling granularity on some or all carriers on the specific frequency spectrum to a terminal.

In step S204, when the foregoing data scheduling granularity configuration manner in step S202 is used, the option of the data scheduling granularity on the some or all carriers on the specific frequency spectrum includes the data scheduling granularity, in the time domain and/or in the frequency domain for the LTE system, configured in step S202. If the data scheduling granularity used in the first wireless communications system is the default data scheduling granularity in the time domain and/or in the frequency domain, the data scheduling granularity may be indicated to the terminal without using signaling.

When the foregoing data scheduling granularity configuration manner in step S2031 is used, the option of the data scheduling granularity on the carrier on the specific frequency spectrum includes the data scheduling granularity, in the time domain and/or in the frequency domain for the LTE system, configured in step S2031.

When the foregoing data scheduling granularity configuration manner in step S2032 is used, the data scheduling granularity on the carrier on the shared specific frequency spectrum of the specific frequency spectrum is different from the data scheduling granularity on the carrier on the non-shared specific frequency spectrum of the specific frequency spectrum. If the data scheduling granularity on the carrier on the non-shared specific frequency spectrum used in the first wireless communications system is the default data scheduling granularity, the data scheduling granularity on the carrier on the non-shared specific frequency spectrum may be indicated to the terminal without using signaling. In the foregoing option of the data scheduling granularity, the data scheduling granularity configured in step S202, step S2031, or step S2032 may be represented by a corresponding number, where the number is preset by the base station. When the base station subsequently notifies the terminal, the base station only needs to send the number. For example, a number of the first type of the data scheduling granularity of the PRB is preset to 1, a number of the second type of the data scheduling granularity is preset to 2, and a number of the third type of the data scheduling granularity is preset to 3. In a process of performing the foregoing step S202, step S2031, or step S2032, for the acquired different types of data scheduling granularities, the base station allocates corresponding numbers according to a preset setting.

That is, through an indication in step S204, the terminal may determine, by using specific content or a number and/or a default data scheduling granularity in the indicated option of the data scheduling granularity, a manner in which the base station configures the data scheduling granularity for the first wireless communications system on the carrier on the specific frequency spectrum.

Step S205: The base station performs data scheduling for the terminal according to the configured data scheduling granularity on the carrier on the specific frequency spectrum, and indicates a corresponding data scheduling result to the terminal.

In step S205, the base station performs data scheduling for the terminal according to a type of the data scheduling granularity configured in step S201. That is, when the data scheduling granularity configuration manner in step S202 is used, the base station performs data scheduling for the terminal in an existing manner. When the configuration manner in step S2031 in which a frequency spectrum resource is shared with the WiFi system is used to configure the data scheduling granularity for the LTE system on the specific frequency spectrum, the base station performs data scheduling for the terminal according to the configured data scheduling granularity close to the data scheduling granularity for the WiFi system. When a configuration manner in step S2032 in which a frequency spectrum resource is shared with the WiFi system is used to configure the data scheduling granularity for the LTE system on the shared specific frequency spectrum, the base station performs, on the shared specific frequency spectrum, data scheduling for the terminal according to the configured data scheduling granularity close to the data scheduling granularity for the WiFi system, and performs, on the non-shared specific frequency spectrum, data scheduling for the terminal in the existing manner.

In Embodiment 2 of the present invention, a data scheduling granularity for an LTE system on a carrier on a specific frequency spectrum is configured, so that when a WiFi system also exists, the data scheduling granularity in a time domain and in a frequency domain for the LTE system is closer to a data scheduling granularity for the WiFi system; data scheduling is performed for a terminal by using the configured data scheduling granularity; and finally, a corresponding data scheduling result is indicated to the terminal. Based on the foregoing configuration manner, when a frequency spectrum resource is used between the LTE system and the WiFi system that are on the specific frequency spectrum, objectives of more even distribution and more use of a system resource are achieved.

It should be noted that when it is determined, in step S201, that only the LTE system exists on the specific frequency spectrum, step S2031 or step S2032 may be performed, to configure the data scheduling granularity for the LTE system in the configuration manner in step S2031 or step S2032. The data scheduling granularity for the LTE system may be not necessarily configured in the configuration manner in step S202. The foregoing gives an exemplary embodiment of the present invention.

**Embodiment 3**

Based on the data scheduling methods disclosed in Embodiment 1 of the present invention and Embodiment 2 of the present invention:

In a process of performing step S102 shown in FIG. 5 and step S204 shown in FIG. 6 in which the base station indicates the option of the data scheduling granularity on the carrier on the specific frequency spectrum to the terminal, and after the data scheduling granularity, in the time domain and/or in the frequency domain for the first wireless communications system on the carrier on the specific frequency spectrum, in the option of the data scheduling granularity is acquired, indication may be performed in two manners.

In a first manner, the data scheduling granularity in the time domain and/or in the frequency domain is indicated to the terminal by using scheduling information on the carrier on the shared specific frequency spectrum.

In a second manner, the data scheduling granularity in the time domain and/or in the frequency domain is indicated to the terminal by using scheduling information on a carrier on another frequency spectrum than the carrier on the shared specific frequency spectrum.

A manner of configuring and generating the indicated data scheduling granularity is not limited in the foregoing two indication manners.

Based on the data scheduling methods disclosed in Embodiment 1 of the present invention and Embodiment 2 of the present invention:

In a process of performing step S103 shown in FIG. 5 and step S205 shown in FIG. 6 in which data scheduling is performed for the terminal, the base station performs data scheduling for the terminal according to the configured data scheduling granularity, on the carrier on the specific frequency spectrum, indicated in the option of the data scheduling granularity, and indicates the corresponding data scheduling result to the terminal.

In step S103 shown in FIG. 5 and step S205 shown in FIG. 6, data scheduling is performed for the terminal in at least two manners, and the data scheduling result is indicated to the terminal also in at least two manners.

A process in which the data scheduling granularity for the first wireless communications system on the carrier on the specific frequency spectrum is configured according to the two different exemplary manners shown in Embodiment 2 of the present invention, data scheduling is performed for the terminal by using the configured data scheduling granularity on the carrier on the specific frequency spectrum, and the data scheduling result is indicated to the terminal is as follows:

When the data scheduling granularity for the first wireless communications system on the carrier on the specific frequency spectrum is configured in the manner in step S202 shown in FIG. 6, a corresponding data scheduling result is acquired according to the data scheduling granularity.

Based on the manner of configuring the data scheduling granularity for the LTE system on the carrier on the specific frequency spectrum in step S202 shown in FIG. 6, the data scheduling granularity is obtained, data scheduling is performed for the terminal, and the data scheduling result is indicated to the terminal.

For a terminal, the data scheduling result on the carrier on the shared specific frequency spectrum may be indicated to the terminal by using scheduling information on a non-shared specific frequency spectrum, or the data scheduling result on the carrier on the shared specific frequency spectrum may be indicated to the terminal by using scheduling information on the shared specific frequency spectrum. The scheduling information on the non-shared specific frequency spectrum or shared specific frequency spectrum is a PDCCH/E-PDCCH instruction.

When the data scheduling granularity for the first wireless communications system on the carrier on the specific frequency spectrum is configured in the manner in step S2031 shown in FIG. 6, data scheduling is performed for the terminal according to the data scheduling granularity in the frequency domain that S times the bandwidth of the available shared data channel in the data scheduling period is used as an effective length, and/or according to the data scheduling granularity in the time domain that the scheduling information indicates an effective length, and a corresponding data scheduling result is acquired. Similarly, S may be a numerical value that is greater than 0 and less than or equal to 1. The data scheduling result on a secondary cell on the shared specific frequency spectrum may be indicated to the terminal by using scheduling information on a primary cell on an LTE non-shared specific frequency spectrum, or the data scheduling result on a secondary cell on the shared specific frequency spectrum may be indicated to the terminal by using scheduling information on a secondary cell on an LTE shared specific frequency spectrum.

Based on the manner of configuring the data scheduling granularity for the LTE system on the carrier on the specific frequency spectrum in step S2032 shown in FIG. 6, there may be two manners of obtaining the data scheduling granularity, performing data scheduling for the terminal, and indicating the data scheduling result to the terminal.

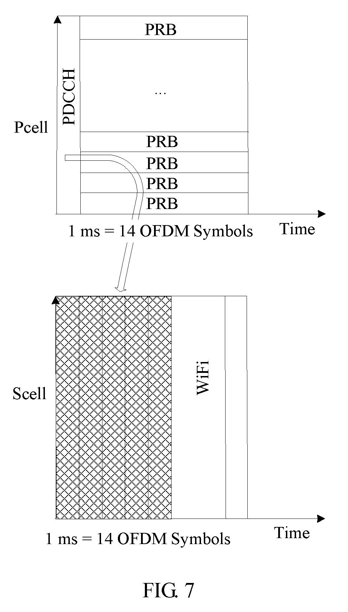

In a first manner, as shown in FIG. 7, the data scheduling result on the carrier on the shared specific frequency spectrum is indicated to the terminal by using the scheduling information on the carrier on the non-shared specific frequency spectrum.

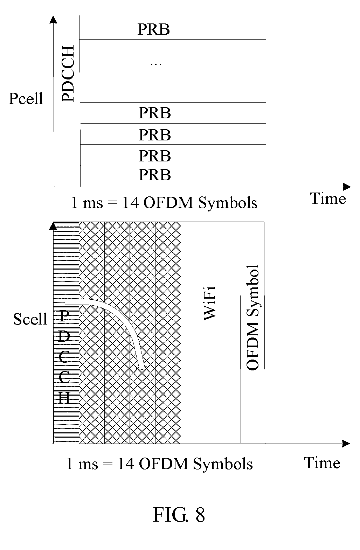

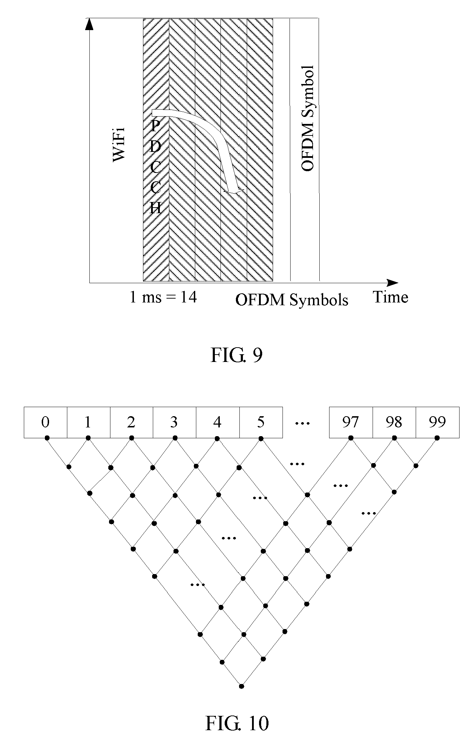

In a second manner, as shown in FIG. 8, the data scheduling result on the carrier on the shared specific frequency spectrum is indicated to the terminal by using the scheduling information on the carrier on the shared specific frequency spectrum. In this case, some resources on the carrier on the shared specific frequency spectrum are used as data scheduling control channels. Because the first wireless communications system (the LTE system) and the second wireless communications system (the WiFi system) share a frequency spectrum resource on the shared specific frequency spectrum, a location, in the scheduling information on the carrier on the shared specific frequency spectrum, for transmitting a resource may be not fixed. As shown in FIG. 9, in a TTI scheduling period for the first wireless communications system, some resources are occupied by the second wireless communications system (the WiFi system). Transmitting resources of control channel (PDCCH) for a data scheduling, for the first wireless communications system, on the carrier on the shared specific frequency spectrum is related to a situation in which the second wireless communications system occupies the shared specific frequency spectrum.

It should be noted that when different data scheduling granularities are used for data scheduling, in a process of indicating a data scheduling result to the terminal, data scheduling information in a same format may be used to indicate the data scheduling result to the terminal. When the data scheduling result is indicated to the terminal by using the data scheduling information in the same format, a format of the data scheduling result is that a same resource scheduling field of the scheduling information is used to indicate the data scheduling result.

With reference to FIG. 6 and the further description of the steps in FIG. 6 in Embodiment 2 of the present invention, examples are used for description on the basis of the LTE system and the WiFi system.

By performing step S202, step S2031, or step S2032 in which the data scheduling granularity for the LTE system on the specific frequency spectrum is configured in different manners, data scheduling is performed for the terminal separately according to the configured data scheduling granularities, and corresponding data scheduling results are acquired. In a process of performing data scheduling for the terminal, for the foregoing scheduling corresponding to the data scheduling granularity obtained by using different data scheduling granularities, a same resource scheduling field is used to indicate the data scheduling results respectively corresponding to the data scheduling granularities.

For example, in a Resource assignment field of downlink scheduling signaling, an X bit is used to indicate the data scheduling results respectively corresponding to the data scheduling granularities.

A formula (1) indicates resource allocation results in cases of different data scheduling granularities in downlink scheduling:

$$X \geq \max\left(\left\lceil \log_2(N_{\text{RB}}^{\text{DL}}(N_{\text{RB}}^{\text{DL}}+1)/2)\right\rceil, \left\lceil \log_2(N_{\text{OFDM}}^{\text{TTI}}(N_{\text{OFDM}}^{\text{TTI}}+1)/2)\right\rceil\right) \quad (1);$$

and

a formula (2) indicates resource allocation results in cases of different data scheduling granularities in uplink scheduling:

$$X \geq \max\left(\left\lceil \log_2(N_{\text{RB}}^{\text{UL}}(N_{\text{RB}}^{\text{UL}}+1)/2)\right\rceil, \left\lceil \log_2(N_{\text{OFDM}}^{\text{TTI}}(N_{\text{OFDM}}^{\text{TTI}}+1)/2)\right\rceil\right) \quad (2),$$

where

$N_{\text{RB}}^{\text{DL}}$ is a maximum value for frequency domain scheduling on an available shared data channel in a data scheduling period, and is a ratio of bandwidth of the shared data channel to a scheduling granularity in a frequency domain;

$N_{\text{OFDM}}^{\text{TTI}}$ is a maximum value for time domain scheduling on an available shared data channel in a data scheduling period, and is a ratio of a time domain length of shared data to a scheduling granularity in a time domain; and

$N_{RB}^{DL}$ and $N_{RB}^{UL}$ are respectively a quantity of downlink PRBs and a quantity of uplink PRBs that are in the LTE system.

That X = 13 bits is used as an example during downlink scheduling in which $N_{\text{RB}}^{\text{DL}} = 100$ and $N_{\text{OFDM}}^{\text{TTI}} = 14$.

For a first type of data scheduling granularity:

an existing data scheduling granularity in the LTE system, that is, for each time of data scheduling, an effective length in a time domain is duration of an available shared data channel in a scheduling period, and an effective length in a frequency domain is a frequency domain width of one PRB.

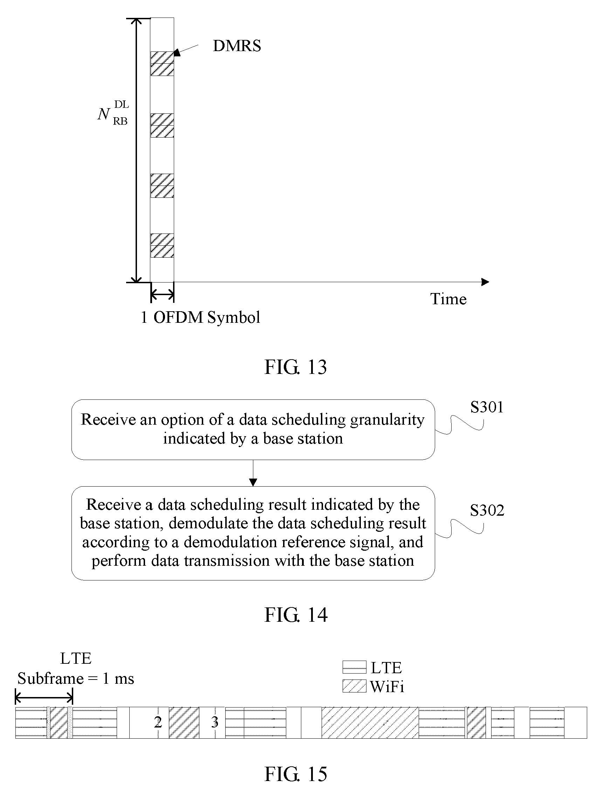

As shown in FIG. 10, 13 bits may be used to indicate data scheduling for UE that starts from any PRB and ends in any PRB.

For a second type of data scheduling granularity:

for each time of data scheduling, an effective length in a frequency domain is S times bandwidth of an available shared data channel in a scheduling period, and an effective length in a time domain is indicated by scheduling signaling. In this case, a value of S is 1.

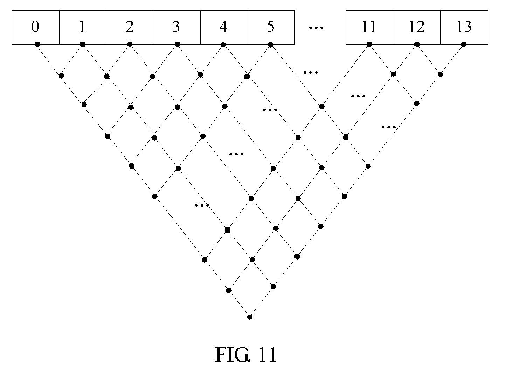

As shown in FIG. 11, the first 7 bits (including a total of 14 OFDM symbols from 0 to 13) in the 13 bits may be used to indicate data scheduling for UE in the time domain that starts from any OFDM symbol and ends in any OFDM symbol; the last 6 bits in the 13 bits are set as reserved bits for extension use.

For a third type of data scheduling granularity:

for each time of data scheduling, an effective length of in a frequency domain is 1/4 (that is, a value of S is 0.25) of bandwidth of an available shared data channel in a scheduling period, and an effective length in a time domain is indicated by using scheduling information.

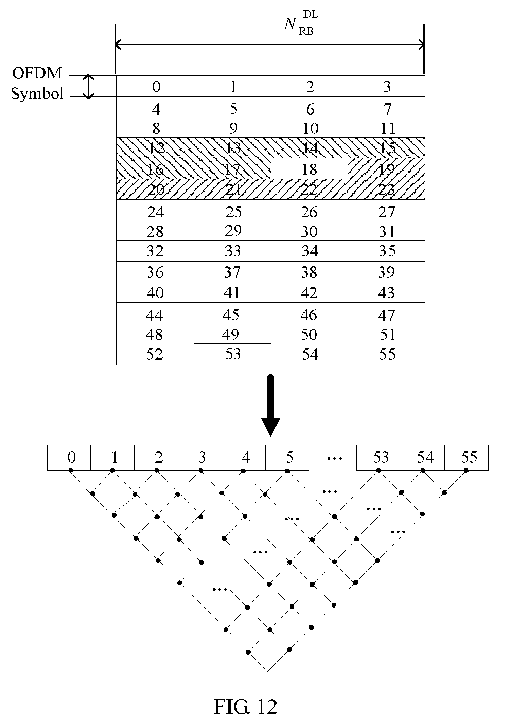

As shown in FIG. 12, resources on a shared data channel in a scheduling period are numbered as resources 0 to 55 according to scheduling granularities. As shown in FIG. 12, the first 12 bits in the 13 bits may be used to indicate data scheduling for UE in the time domain that starts from any scheduling resource and ends in any scheduling resource; the last one bit in the 13 bits is set as a reserved bit for extension use.

Based on the data scheduling methods disclosed in Embodiment 1 of the present invention and Embodiment 2 of the present invention, after step S103 shown in FIG. 5 or step S205 shown in FIG. 6 is performed, the method further includes:

after performing data scheduling for the terminal according to the configured data scheduling granularity, during transmission of the scheduled data, and in each data scheduling granularity of the scheduled data, mapping, by the base station, a demodulation reference signal required for demodulating the scheduled data, so as to achieve an objective of performing data transmission with the terminal the base station. A status of an existing data scheduling granularity is used as a mapping condition when the demodulation reference signal is mapped. By performing this step, data communication may be finally performed between the base station and the terminal by using the foregoing configured data scheduling result.

In this step, resource mapping is performed on the demodulation reference signal according to the data scheduling granularity, for the first wireless communications system on the specific frequency spectrum, configured in step S101 shown in FIG. 5 or step S202, step S2031, or step S2032 shown in FIG. 6, so that when a size of a data scheduling resource is equal to the data scheduling granularity, the scheduled data can be correctly demodulated.

The foregoing resource mapping is described according to the foregoing data scheduling granularity obtained by performing configuration in step S2031 shown in Embodiment 2 of the present invention.

For the data scheduling granularity obtained by performing step S2031 shown in FIG. 6, for each time of data scheduling, an effective length in the frequency domain is bandwidth of the available shared data channel in the scheduling period, and an effective length in the time domain is indicated by using scheduling information, where the effective length indicated by using the scheduling information is a time domain length of one OFDM symbol. Therefore, a demodulation reference signal used during data transmission may be mapped in resources that are in the frequency domain of the available shared data channel in the scheduling period and of a time width of one OFDM symbol.

The following FIG. 13 shows a resource mapping manner of a demodulation reference signal. An oblique-line part in FIG. 13 is a location at which a demodulation reference signal DMRS is mapped in resources that are in the frequency domain of the available shared data channel in the scheduling period and of a time width of one OFDM symbol. In this manner, when the data scheduling result is one OFDM symbol, the data can be correctly demodulated.

According to further descriptions in the steps in Embodiment 1 of the present invention based on FIG. 5 and in Embodiment 2 of the present invention based on FIG. 6, it is emphasized that a data scheduling granularity for a first wireless communications system on a carrier on a shared specific frequency spectrum is configured, and data scheduling is performed for a terminal according to the configured data scheduling granularity that is more accurate in a time domain and in a frequency domain. When an LTE system and a WiFi system coexist on a specific frequency spectrum, the LTE system and the WiFi system share a specific frequency spectrum resource according to the more accurate data scheduling granularity in the time domain and in the frequency domain, so that during data transmission between the LTE system and the WiFi system, transmission opportunities are relatively evenly distributed and system resources are more fully used.

**Embodiment 4**

As shown in FIG. 14, FIG. 14 is a flowchart of a data scheduling method according to an embodiment of the present invention, where the data scheduling method is applied to a terminal, and mainly includes the following steps:

Step S301: The terminal receives an option of a data scheduling granularity indicated by a base station, where the option of the data scheduling granularity includes a configured data scheduling granularity in a time domain and in a frequency domain for a first wireless communications system on a carrier on a specific frequency spectrum, and the specific frequency spectrum includes a shared specific frequency spectrum and a non-shared specific frequency spectrum.

In step S301, the terminal receives a data scheduling result indicated by the base station mainly in two manners, which are the same as those disclosed in Embodiment 1 and Embodiment 2 of the present invention:

One manner is receiving the data scheduling result for the first wireless communications system on the carrier on the specific frequency spectrum according to scheduling information on the non-shared specific frequency spectrum.

The other manner is receiving the data scheduling result for the first wireless communications system on the carrier on the specific frequency spectrum according to scheduling information on the shared specific frequency spectrum. Step S302: The terminal receives a data scheduling result indicated by the base station, demodulates the data scheduling result according to a demodulation reference signal, and performs data transmission with the base station.

Resource mapping is performed on the demodulation reference signal according to the configured data scheduling granularity for the first wireless communications system on the specific frequency spectrum.

In step S302, a manner in which the terminal receives the data scheduling result indicated by the base station, demodulates the data scheduling result according to the demodulation reference signal, and performs data transmission with the base station echoes with the manner in the step, disclosed in Embodiment 3 of the present invention, in which the base station demodulates the data scheduling result according to the demodulation reference signal, and performs data transmission with the terminal.

It should be noted that when step S301 is performed in which the data scheduling result for the first wireless communications system on the carrier on the specific frequency spectrum is received according to the scheduling information on the shared specific frequency spectrum, because the first wireless communications system (an LTE system) and a second wireless communications system (a WiFi system) share a frequency spectrum resource on the shared specific frequency spectrum, a location, in the scheduling information on the shared specific frequency spectrum, for transmitting a resource may be no fixed. As shown in FIG. 9, in a TTI scheduling period for the first wireless communications system, some resources are occupied by the second wireless communications system (the WiFi system). Transmitted resources of the scheduling information (PDCCH) for the first wireless communications system is related to a situation in which the second wireless communications system occupies the shared specific frequency spectrum.

Therefore, the terminal needs to perform, on multiple OFDMs on the carrier on the shared specific frequency spectrum, blind detection on scheduling information until the scheduling information (PDCCH) for the first wireless communications system is detected, and then receive the data scheduling result for the first wireless communications system on the specific frequency spectrum according to the scheduling information on the shared specific frequency spectrum.

According to the data transmission methods, disclosed in Embodiment 1 of the present invention to Embodiment 4 of the present invention. applied to a base station and a terminal, a specific frequency spectrum can be properly used. For example, for a wireless communications system with a different physical resource allocation manner and with a different size of a scheduling resource, a data scheduling granularity for a first wireless communications system on a carrier on the specific frequency spectrum is configured, so that data scheduling in a time domain and in a frequency domain for the first wireless communications system is more accurate.

The LTE system and the WiFi system, given in the foregoing embodiments of the present invention, coexist on the specific frequency spectrum. As shown in FIG. 15, FIG. 15 is a schematic structural diagram of a radio frame obtained after the LTE system and the WiFi system share a specific frequency spectrum resource on a specific frequency spectrum during data scheduling by using the data scheduling methods disclosed in Embodiment 1 of the present invention to Embodiment 4 of the present invention, where a horizontal-line part in FIG. 15 is data transmission in the LTE system, and an oblique-line part is data transmission in the WiFi system.

For the data scheduling methods described in detail in the foregoing embodiments disclosed in the present invention, embodiments of the present invention further disclose apparatuses that correspondingly perform the foregoing methods, and specific embodiments are given in the following for detailed description.

**Embodiment 5**

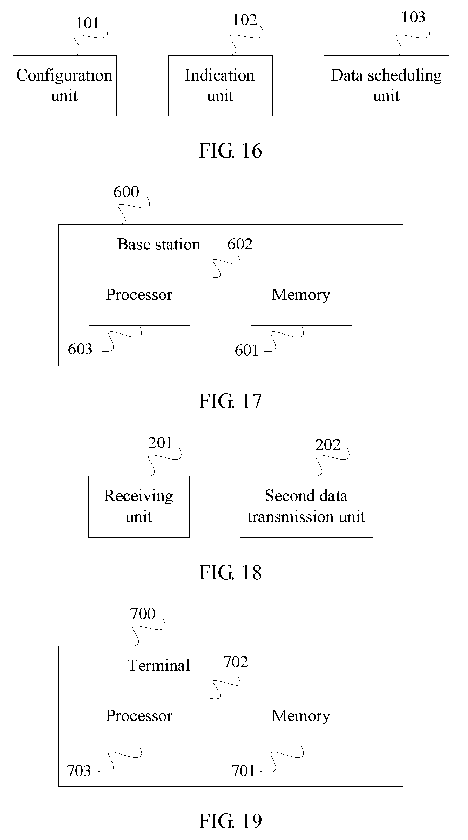

As shown in FIG. 16, FIG. 16 is a schematic structural diagram of an apparatus corresponding to the data scheduling method described in Embodiment 1 of the present invention, where the data scheduling apparatus is applied to a base station side, and mainly includes:

a configuration unit 101, configured to configure a data scheduling granularity in a time domain and in a frequency domain for a first wireless communications system on a carrier on a specific frequency spectrum, and send the data scheduling granularity to an indication unit 102;

the indication unit 102, configured to: indicate an option of the data scheduling granularity on some or all carriers on the specific frequency spectrum to a terminal UE, and send the data scheduling granularity to a data scheduling unit 103; and

the data scheduling unit 103, configured to: perform data scheduling for the terminal UE according to the configured data scheduling granularity, indicated in the option of the data scheduling granularity, on the carrier on the specific frequency spectrum, and indicate a corresponding data scheduling result to the terminal UE.

An execution principle and an execution process of each part in the data transmission apparatus disclosed in Embodiment 5 of the present invention are the same as those of a corresponding part of the data transmission method disclosed in Embodiment 1 of the present invention, and details are not described herein again.

Based on the structure of the data scheduling apparatus disclosed in Embodiment 5 of the present invention, the apparatus further includes a first data transmission unit, where the first data transmission unit is connected to the data scheduling unit, and is configured to: map a demodulation reference signal to each data scheduling granularity for scheduled data that needs to be transmitted, demodulate the scheduled data according to the demodulation reference signal, and perform data transmission with the terminal UE, where during mapping of the demodulation reference signal, a status of the data scheduling granularity output by the configuration unit is used as a mapping condition.

An execution principle and an execution process of each part in the data transmission apparatus disclosed in Embodiment 5 of the present invention are the same as those of a corresponding part, related to data transmission, disclosed in Embodiment 3 of the present invention, and details are not described herein again.

For the foregoing data scheduling apparatus disclosed in Embodiment 5 of the present invention, the configuration unit 101 may be specifically:

a detection module, configured to detect whether a second wireless communications system applied on the carrier on the specific frequency spectrum exists, and if no second wireless communications system applied on the carrier on the specific frequency spectrum exists, execute a first configuration module, and if the second wireless communications system applied on the carrier on the specific frequency spectrum exists, execute a second configuration module or a third configuration module.

The first configuration module is configured to to configure a data scheduling granularity on the carrier on the specific frequency spectrum in an existing manner.

The configured data scheduling granularity on the carrier on the specific frequency spectrum is an existing scheduling granularity PRB for the LTE system, that is, a data scheduling granularity that in a time domain, an effective length of data scheduling for the first wireless communications system is duration of an available shared data channel in a data scheduling period, and in a frequency domain, an effective length of the data scheduling for the first wireless communications system is a frequency domain width of one physical resource block. The data scheduling granularity may be a default data scheduling granularity for the first wireless communications system.

The second configuration module is configured to configure data scheduling on the carrier on the specific frequency spectrum.

Specific configuration is a data scheduling granularity that in a time domain, an effective length of data scheduling for the first wireless communications system is a time domain length of one OFDM symbol, and in a frequency domain, an effective length of the data scheduling for the first wireless communications system is S times bandwidth of an available shared data channel in a data scheduling period, where S is a numerical value that is greater than 0 and less than or equal to 1.

The third configuration module is configured to configure a data scheduling granularity in a time domain and in a frequency domain on a carrier on a shared specific frequency spectrum of the specific frequency spectrum, where in the time domain, an effective length of the data scheduling for the first wireless communications system is a time domain length of one OFDM symbol, and in the frequency domain, an effective length of the data scheduling for the first wireless communications system is S times bandwidth of an available shared data channel in a data scheduling period, where S is a numerical value that is greater than 0 and less than or equal to 1.

At the same time, a data scheduling granularity in a time domain and in a frequency domain on a carrier on a non-shared specific frequency spectrum of the specific frequency spectrum is configured as an existing scheduling granularity PRB for the LTE system, that is, in the time domain, an effective length of the data scheduling for the first wireless communications system is duration of an available shared data channel in a data scheduling period, and in the frequency domain, an effective length of the data scheduling for the first wireless communications system is a frequency domain width of one PRB, where the data scheduling granularity may be a default data scheduling granularity for the first wireless communications system.

The indication unit 102 includes:

an acquisition module, configured to acquire, from the option of the data scheduling granularity, the data scheduling granularity in the time domain and/or in the frequency domain for the first wireless communications system on the carrier on the specific frequency spectrum; and

a first indication module, configured to: indicate the data scheduling granularity in the time domain and/or in the frequency domain to the terminal by using scheduling information on the carrier on the shared specific frequency spectrum, and send the data scheduling granularity to the data scheduling unit; or

a second indication module, configured to: indicate the data scheduling granularity in the time domain and/or in the frequency domain to the terminal by using scheduling information on a carrier on another spectrum than the carrier on the shared specific frequency spectrum, and send the data scheduling granularity to the data scheduling unit.

Different indication manners of the data scheduling unit 103 are corresponding to different received data scheduling granularities indicated by the indication unit 102. When the first configuration module configures the data scheduling granularity on the carrier on the specific frequency spectrum, the data scheduling unit includes:

a first data scheduling module, configured to: perform data scheduling for the terminal according to the data scheduling granularity that in the time domain, the effective length of the data scheduling for the first wireless communications system is the duration of the available shared data channel in the data scheduling period, and in the frequency domain, the effective length of the data scheduling for the first wireless communications system is the frequency domain width of one PRB, and acquire a corresponding data scheduling result; and
a second indication module, configured to: indicate the data scheduling result of the shared specific frequency spectrum to the terminal by using scheduling information on the non-shared specific frequency spectrum, or indicate the data scheduling result of the shared specific frequency spectrum to the terminal by using scheduling information on the shared specific frequency spectrum, and send the data scheduling result to the first data transmission unit, where
the scheduling information on the non-shared frequency spectrum or the shared frequency spectrum is a PDCCH instruction or an E-PDCCH instruction.

When the second configuration module configures the data scheduling granularity on the carrier on the specific frequency spectrum, the data scheduling unit includes:

a second data scheduling module, configured to: perform data scheduling for the terminal according to the data scheduling granularity that S times the bandwidth of the available shared data channel in the data scheduling period is used as the effective length in the frequency domain, and/or according to the data scheduling granularity that the effective length in the time domain is indicated by using the scheduling information, and acquire a corresponding data scheduling result; and
a third indication module, configured to: indicate the data scheduling result on a secondary cell on the shared frequency spectrum to the terminal by using scheduling information on a primary cell on an LTE non-shared frequency spectrum, or indicate the data scheduling result on a secondary cell on the shared frequency spectrum to the terminal by using scheduling information on a secondary cell on an LTE shared frequency spectrum, and send the data scheduling result to the first data transmission unit.

Scheduling information on a primary cell on the non-shared specific frequency spectrum is a physical downlink control channel instruction or an enhanced physical downlink control channel instruction.
When the third configuration module configures the data scheduling granularity on the carrier on the specific frequency spectrum, the data scheduling unit includes:

a third data scheduling module, configured to: perform data scheduling for the terminal according to the data scheduling granularity in the time domain and in the frequency domain on the carrier on the shared specific frequency spectrum of the specific frequency spectrum, or the data scheduling granularity in the time domain and in the frequency domain on the carrier on the non-shared specific frequency spectrum of the specific frequency spectrum, that is, the existing scheduling granularity PRB for the LTE system, and acquire a corresponding data scheduling result; and
a fourth indication module, configured to: indicate the data scheduling result of the shared specific frequency spectrum to the terminal by using scheduling information on the non-shared specific frequency spectrum, or indicate the data scheduling result of the shared specific frequency spectrum to the terminal by using scheduling information on the shared specific frequency spectrum, and send the data scheduling result to the first data transmission unit.

Based on the foregoing disclosed module structure included in each unit, the data scheduling unit 103 further includes:

a unified format module, configured to: when data scheduling is performed for the terminal according to different data scheduling granularities, for the first wireless communications system on the specific frequency spectrum, indicated in the option of the data scheduling granularity, unify a format of the data scheduling result.

The foregoing data scheduling apparatus that is disclosed in Embodiment 5 of the present invention and applied to the base station side may be integrated, in actual application, in a memory that includes a storage medium. It may be learned from the foregoing description that, a person skilled in the art may clearly understand that the present application may be implemented by using software in addition to a necessary universal hardware platform. Therefore, the present application further provides a base station. As shown in FIG. 17, the base station 600 includes a memory 601 and a processor 603 connected to the memory 601 by using a bus 602.

The memory 601 stores a program in which a base station side performs data scheduling.

The memory may include a high-speed RAM memory, and may also include a non-volatile memory, for example, at least one disk memory.

The processor runs the foregoing program. The foregoing program may include a program code, where the program code includes a series of operation instructions that are arranged in a specific order. The processor may be a central processing unit CPU, or a specific integrated circuit, or one or more integrated circuits configured to implement this embodiment of the present invention.

The program in which the base station side performs data scheduling may specifically include:

configuring a data scheduling granularity in a time domain and in a frequency domain for a first wireless communications system on a carrier on a specific frequency spectrum;

indicating an option of the data scheduling granularity on some or all carriers on the specific frequency spectrum to a terminal; and

performing data scheduling for the terminal UE according to the data scheduling granularity indicated in the option of the configured data scheduling granularity on the carrier on the specific frequency spectrum, and indicating a corresponding data scheduling result to the terminal UE.

A principle of performing data transmission by the module structures limited or added in each unit, and an execution process are the same as those of corresponding parts in the data transmission methods disclosed in Embodiment 2 of the present invention and Embodiment 3 of the present invention, which may be referenced mutually, and details are not described herein again.

**Embodiment 6**

As shown in FIG. 18, FIG. 18 is a schematic structural diagram of an apparatus corresponding to the data scheduling method described in Embodiment 4 of the present invention, where the data scheduling apparatus is applied to a terminal side, and mainly includes:

a receiving unit 201, configured to receive an option of a data scheduling granularity indicated by a base station eNB, where the option of the data scheduling granularity includes a configured data scheduling granularity for a first wireless communications system on a carrier on a specific frequency spectrum, and the specific frequency spectrum includes a shared specific frequency spectrum and a non-shared specific frequency spectrum; and

a second data transmission unit 202, configured to receive a data scheduling result indicated by the base station eNB, demodulate the data scheduling result according to a demodulation reference signal, and perform data transmission with the base station eNB, where

resource mapping is performed on the demodulation reference signal according to the configured data scheduling granularity for the first wireless communications system on the specific frequency spectrum.

The second data transmission unit 202 may be specifically:

a first receiving module, configured to receive the data scheduling result for the first wireless communications system on the carrier on the specific frequency spectrum according to scheduling information on the shared specific frequency spectrum, where

the first receiving module includes a blind detection module, configured to perform blind detection on a physical downlink control channel in at least one OFDM symbol, to acquire the scheduling information on the specific frequency spectrum.

Alternatively, the second data transmission unit 202 may be specifically:

a second receiving module, configured to receive the data scheduling result for the first wireless communications system on the carrier on the specific frequency spectrum according to scheduling information on a carrier on another spectrum than the shared specific frequency spectrum.

The foregoing data scheduling apparatus that is disclosed in Embodiment 6 of the present invention and applied to the terminal side may also be integrated, in actual application, in a memory that includes a storage medium. It may be learned from the foregoing description that, a person skilled in the art may clearly understand that the present application may be implemented by using software in addition to a necessary universal hardware platform. Therefore, the present application further provides a terminal. As shown in FIG. 19, the terminal 700 includes a memory 701 and a processor 703 connected to the memory 701 by using a bus 702.

The memory stores a program in which a terminal side performs data scheduling.

The memory may include a high-speed RAM memory, and may also include a non-volatile memory, for example, at least one disk memory.

The processor runs the foregoing program. The foregoing program may include a program code, where the program code includes a series of operation instructions that are arranged in a specific order. The processor may be a central processing unit CPU, or a specific integrated circuit, or one or more integrated circuits configured to implement this embodiment of the present invention.

The program in which the terminal side performs data scheduling may specifically include:

receiving an option of a data scheduling granularity indicated by a base station eNB, where the option of the data scheduling granularity includes a configured data scheduling granularity for a first wireless communications system on a carrier on a specific frequency spectrum, and the specific frequency spectrum includes a shared specific frequency spectrum and a non-shared specific frequency spectrum; and

receiving a data scheduling result indicated by the base station eNB, demodulating the data scheduling result according to a demodulation reference signal, and performing data transmission with the base station eNB.

An execution principle and an execution process of each part in the data transmission apparatus disclosed in Embodiment 6 of the present invention are the same as those of a corresponding part in the data transmission method disclosed in Embodiment 4 of the present invention, and details are not described herein again.

In conclusion:

According to the data transmission method and apparatus disclosed in the embodiments of the present invention, before data transmission, a base station configures a data scheduling granularity for a first wireless communications system on a carrier on a specific frequency spectrum; during data transmission, when sharing of a specific frequency spectrum resource is involved, the base station performs data scheduling for a terminal by using the configured data scheduling granularity, and indicates a corresponding data scheduling result to the terminal. The data scheduling granularity for the wireless communications system on the carrier on the specific frequency spectrum is configured; therefore, when a specific frequency spectrum resource is used between systems, objectives of more even distribution and more use of a system resource are achieved. Further, data transmission between the base station and the terminal is implemented based on the data scheduling result.

The embodiments in this specification are all described in a progressive manner, for same or similar parts in the embodiments, reference may be made to these embodiments, and each embodiment focuses on a difference from other embodiments. The apparatus disclosed in the embodiment is basically similar to the method disclosed in the embodiment, and therefore is described briefly; for related parts, reference may be made to partial descriptions of the method.

In combination with the embodiments disclosed in this specification, method or algorithm steps may be implemented by hardware, a software module executed by a processor, or a combination thereof. The software module may be configured in a random access memory (RAM), a memory, a read-only memory (ROM), an electrically programmable ROM, an electrically erasable programmable ROM, a register, a hard disk, a removable disk, a CD-ROM, or a storage medium in any other forms well-known in the art.

The embodiments disclosed above are described to enable a person skilled in the art to implement or use the present invention. Various modifications made to the embodiments will be obvious to a person skilled in the art. Therefore, the present invention is not intended to be limited to these embodiments illustrated herein, but shall be construed in the widest scope consistent with the principles and novel features disclosed herein.

**Claims**

1. A data scheduling method, applied to a base station, comprising:

configuring a data scheduling granularity in a time domain and in a frequency domain for a first wireless communications system on a carrier on a specific frequency spectrum;

indicating an option of the configured data scheduling granularity on some or all carriers on the specific frequency spectrum to a terminal; and

performing data scheduling for the terminal according to the configured data scheduling granularity on the carrier on the specific frequency spectrum, and indicating a data scheduling result obtained after the data scheduling to the terminal.

2. The method according to claim 1, wherein the configuring a data scheduling granularity in a time domain and in a frequency domain for a first wireless communications system on a carrier on a specific frequency spectrum comprises:

determining whether a second wireless communications system applied on the carrier on the specific frequency spectrum exists; and

when no second wireless communications system applied on the carrier on the specific frequency spectrum exists, configuring the data scheduling granularity in the time domain and in the frequency domain for the first wireless communications system on the carrier on the specific frequency spectrum, wherein

in the time domain, an effective length of the data scheduling for the first wireless communications system is duration of an available shared data channel in a data scheduling period; and

in the frequency domain, an effective length of the data scheduling for the first wireless communications system is a frequency domain width of one physical resource block, wherein

the first wireless communications system is a Long Term Evolution LTE system.

3. The method according to claim 1, wherein the configuring a data scheduling granularity in a time domain and in a frequency domain for a first wireless communications system on a carrier on a specific frequency spectrum comprises:

determining whether a second wireless communications system applied on the carrier on the specific frequency spectrum exists; and

when the second wireless communications system applied on the carrier on the specific frequency spectrum exists, configuring the data scheduling granularity in the time domain and in the frequency domain on the carrier on the specific frequency spectrum, wherein

in the time domain, an effective length of the data scheduling for the first wireless communications system is a time domain length of one orthogonal frequency division multiplexing OFDM symbol; and

in the frequency domain, an effective length of the data scheduling for the first wireless communications system is S times bandwidth of an available shared data channel in a data scheduling period, wherein S is a numerical value that is greater than 0 and less than or equal to 1; and

the first wireless communications system is an LTE system, and the second wireless communications system is a Wireless Fidelity WiFi system.

4. The method according to claim 1, wherein the configuring a data scheduling granularity in a time domain and in a frequency domain for a wireless communications system on a carrier on a specific frequency spectrum comprises:

determining whether a second wireless communications system applied on the carrier on the specific frequency spectrum exists;

when the second wireless communications system applied on the carrier on the specific frequency spectrum exists, configuring a data scheduling granularity in the time domain and in the frequency domain for the first wireless communications system on a carrier on a shared specific frequency spectrum of the specific frequency spectrum, wherein

in the time domain, an effective length of the data scheduling for the first wireless communications system is a time domain length of one OFDM symbol; and

in the frequency domain, an effective length of the data scheduling for the first wireless communications system is S times bandwidth of an available shared data channel in a data scheduling period, wherein S is a numerical value that is greater than 0 and less than or equal to 1; and

configuring a data scheduling granularity in the time domain and in the frequency domain for the first wireless communications system on a carrier on a non-shared specific frequency spectrum of the specific frequency spectrum, wherein

in the time domain, an effective length of the data scheduling for the first wireless communications system is duration of an available shared data channel in a data scheduling period; and

in the frequency domain, an effective length of the data scheduling for the first wireless communications system is a frequency domain width of one physical resource block, wherein

the first wireless communications system is an LTE system, and the second wireless communications system existing on the specific frequency spectrum is a WiFi system.

5. The method according to any one of claims 1 to 4, wherein the indicating an option of the configured data scheduling granularity on some or all carriers on the specific frequency spectrum to a terminal comprises:

acquiring, from the option of the data scheduling granularity, the data scheduling granularity in the time domain and/or in the frequency domain for the first wireless communications system on the specific frequency spectrum; and

indicating the data scheduling granularity in the time domain and/or in the frequency domain to the terminal by using scheduling information on the carrier on the shared specific frequency spectrum; or

indicating the data scheduling granularity in the time domain and/or in the frequency domain to the terminal by using scheduling information on a carrier on another frequency spectrum than the carrier on the shared specific frequency spectrum.

6. The method according to claim 4, wherein the indicating an option of the configured data scheduling granularity on some or all carriers on the specific frequency spectrum to a terminal comprises:

when the option of the data scheduling granularity is the data scheduling granularity in the time domain and in the frequency domain for the first wireless communications system on the carrier on the shared specific frequency spectrum of the specific frequency spectrum, indicating the data scheduling granularity to the terminal by using scheduling information on the carrier on the shared specific frequency spectrum or scheduling information on a carrier on another frequency spectrum than the carrier on the shared specific frequency spectrum, wherein a condition for not sending an indication to the terminal is that the option of the data scheduling granularity is the data scheduling granularity in the time domain and in the frequency domain for the first wireless communications system on the carrier on the non-shared specific frequency spectrum of the specific frequency spectrum.

7. The method according to claim 1 or 2, wherein the performing data scheduling for the terminal according to the configured data scheduling granularity on the carrier on the specific frequency spectrum comprises:

performing data scheduling for the terminal according to the data scheduling granularity that the effective length in the time domain is the duration of the available shared data channel in the data scheduling period, and/or according to the scheduling granularity of the frequency domain width of one resource block in the frequency domain, and acquiring a corresponding data scheduling result.

8. The method according to claim 1 or 3, wherein the performing data scheduling for the terminal according to the configured data scheduling granularity on the carrier on the specific frequency spectrum comprises:

performing data scheduling for the terminal according to the data scheduling granularity that the effective length in the frequency domain is S times the bandwidth of the available shared data channel in the data scheduling period, and/or according to the data scheduling granularity that the effective length in the time domain is the time domain length of one OFDM symbol, and acquiring a corresponding data scheduling result.

9. The method according to claim 1 or 4, wherein the performing data scheduling for the terminal according to the configured data scheduling granularity on the carrier on the specific frequency spectrum comprises:

on the non-shared specific frequency spectrum of the specific frequency spectrum, performing data scheduling for the terminal according to the data scheduling granularity that the effective length in the time domain is the duration of the available shared data channel in the data scheduling period, and/or according to the scheduling granularity of the frequency domain width of one resource block in the frequency domain, and acquiring a corresponding data scheduling result; and

on the non-shared specific frequency spectrum of the specific frequency spectrum, performing data scheduling for the terminal according to the data scheduling granularity that the effective length in the frequency domain is S times the bandwidth of the available shared data channel in the data scheduling period, and/or according to the data scheduling granularity that the effective length in the time domain is the time domain length of one OFDM symbol, and acquiring a corresponding data scheduling result.

**10.** The method according to claim 7, 8 or 9, wherein the indicating a corresponding data scheduling result to the terminal comprises:

indicating the data scheduling result of the shared specific frequency spectrum to the terminal according to scheduling information on the non-shared specific frequency spectrum; or
indicating the data scheduling result of the shared specific frequency spectrum to the terminal according to scheduling information on the shared specific frequency spectrum.

**11.** The method according to claim 10, wherein the indicating a corresponding data scheduling result to the terminal further comprises:

when configured data scheduling granularities on carriers on the specific frequency spectrum are different, using a same resource scheduling field of the scheduling information to represent the data scheduling result indicated to the terminal.

**12.** The method according to any one of claims 1 to 11, wherein after the indicating a corresponding data scheduling result to the terminal, the method further comprises:

performing data scheduling for the terminal according to the configured data scheduling granularity;
acquiring the scheduled data, and mapping, to each data scheduling granularity of the scheduled data, a demodulation reference signal required for demodulating the scheduled data; and
performing data transmission with the terminal according to a demodulation result, wherein
resource mapping is performed on the demodulation reference signal according to the configured data scheduling granularity for the first wireless communications system on the carrier on the specific frequency spectrum.

**13.** A data scheduling method, applied to a terminal, comprising:

receiving an option, indicated by a base station, of a data scheduling granularity on some or all carriers on a specific frequency spectrum, wherein the option of the data scheduling granularity comprises a configured data scheduling granularity in a time domain and in a frequency domain for a first wireless communications system on the carrier on the specific frequency spectrum; and
receiving a data scheduling result indicated by the base station, demodulating the data scheduling result according to a demodulation reference signal, and performing data transmission with the base station, wherein resource mapping is performed on the demodulation reference signal according to the configured data scheduling granularity for the first wireless communications system on the carrier on the specific frequency spectrum.

**14.** The method according to claim 13, wherein the receiving a data scheduling result indicated by the base station comprises:

receiving the data scheduling result for the first wireless communications system on the specific frequency spectrum according to scheduling information on a carrier on the shared specific frequency spectrum; or
receiving the data scheduling result for the first wireless communications system on the specific frequency spectrum according to scheduling information on a carrier on another spectrum than a carrier on the shared specific frequency spectrum.

**15.** The method according to claim 14, wherein the receiving the data scheduling result for the first wireless communications system on the specific frequency spectrum according to scheduling information on a carrier on the shared specific frequency spectrum comprises:

performing blind detection on a physical downlink control channel in at least one OFDM symbol, to acquire the scheduling information on the specific frequency spectrum; and
receiving the data scheduling result for the first wireless communications system on the specific frequency spectrum according to the scheduling information on the carrier on the shared specific frequency spectrum.

**16.** A data scheduling apparatus, applied to a base station side, comprising:

a configuration unit, configured to configure a data scheduling granularity in a time domain and in a frequency domain for a first wireless communications system on a carrier on a specific frequency spectrum, and send the data scheduling granularity to an indication unit;

the indication unit, configured to: indicate an option of the data scheduling granularity on some or all carriers on the specific frequency spectrum to a terminal, and send the data scheduling granularity to a data scheduling unit; and

the data scheduling unit, configured to perform data scheduling for the terminal according to the data scheduling granularity indicated in the option of the data scheduling granularity, and indicate a corresponding data scheduling result to the terminal.

**17.** The apparatus according to claim 16, further comprising:

the first data transmission unit, configured to receive the data scheduling granularity sent by the configuration unit and the data scheduling result sent by the data scheduling unit, acquire a demodulation reference signal mapped to each data scheduling granularity for scheduled data, demodulate the scheduled data according to the demodulation reference signal, and perform data transmission with the terminal, wherein resource mapping is performed on the demodulation reference signal according to the data scheduling granularity output by the configuration unit.

**18.** The apparatus according to claim 16 or 17, wherein the configuration unit comprises:

a detection module, configured to detect whether a second wireless communications system applied on the carrier on the specific frequency spectrum exists, and when no second wireless communications system applied on the carrier on the specific frequency spectrum exists, execute a first configuration module; and

the first configuration module, configured to configure a data scheduling granularity that in the time domain, an effective length of the first wireless communications system is duration of an available shared data channel in a data scheduling period, and in the frequency domain, an effective length of the first wireless communications system is a frequency domain width of one resource block.

**19.** The apparatus according to claim 16 or 17, wherein the configuration unit comprises:

a detection module, configured to detect whether a second wireless communications system applied on the carrier on the specific frequency spectrum exists, and when the second wireless communications system applied on the carrier on the specific frequency spectrum exists, execute a second configuration module or a third configuration module; and

the second configuration module, configured to configure a data scheduling granularity that in the time domain, an effective length of the data scheduling for the first wireless communications system is a time domain length of one OFDM symbol, and in the frequency domain, an effective length of the data scheduling for the first wireless communications system is S times bandwidth of an available shared data channel in a data scheduling period, wherein S is a numerical value that is greater than 0 and less than or equal to 1; or

the third configuration module, configured to configure a data scheduling granularity in the time domain and in the frequency domain for the first wireless communications system on a carrier on a shared specific frequency spectrum of the specific frequency spectrum, wherein in the time domain, an effective length of the data scheduling for the first wireless communications system is a time domain length of one OFDM symbol, and in the frequency domain, an effective length of the data scheduling for the first wireless communications system is S times bandwidth of an available shared data channel in a data scheduling period, wherein S is a numerical value that is greater than 0 and less than or equal to 1.

**20.** The apparatus according to any one of claims 16 to 19, wherein the indication unit comprises:

an acquisition module, configured to acquire, from the option of the data scheduling granularity, the data scheduling granularity in the time domain and/or in the frequency domain for the first wireless communications system on the carrier on the specific frequency spectrum; and

a first indication module, configured to: indicate the data scheduling granularity in the time domain and/or in the frequency domain to the terminal by using scheduling information on the carrier on the shared specific frequency spectrum, and send the data scheduling granularity to the data scheduling unit; or

a second indication module, configured to: indicate the data scheduling granularity in the time domain and/or in the frequency domain to the terminal by using scheduling information on a carrier on another spectrum than the carrier on the shared specific frequency spectrum, and send the data scheduling granularity to the data scheduling unit.

21. The apparatus according to any one of claims 16 to 18, wherein the data scheduling unit comprises:

a first data scheduling module, configured to: perform data scheduling for the terminal according to the data scheduling granularity that in the time domain, the effective length of the data scheduling for the first wireless communications system is the duration of the available shared data channel in the data scheduling period, and in the frequency domain, the effective length of the data scheduling for the first wireless communications system is the frequency domain width of one resource block PRB, and acquire a corresponding data scheduling result; and

a second indication module, configured to: indicate the data scheduling result of the shared specific frequency spectrum of the specific frequency spectrum to the terminal by using scheduling information on a non-shared specific frequency spectrum, or indicate the data scheduling result of the shared specific frequency spectrum to the terminal by using scheduling information on the shared specific frequency spectrum, and send the data scheduling result to the first data transmission unit, wherein

the scheduling information on the non-shared specific frequency spectrum or shared specific frequency spectrum is a physical downlink control channel PDCCH instruction or an enhanced physical downlink control channel E-PDCCH instruction.

22. The apparatus according to claim 19, wherein when the second configuration module is used for configuration, the data scheduling unit comprises:

a second data scheduling module, configured to: perform data scheduling for the terminal according to the data scheduling granularity that S times the bandwidth of the available shared data channel in the data scheduling period is used as the effective length in the frequency domain, and/or according to the data scheduling granularity that the effective length in the time domain is indicated by using the scheduling information, and acquire a corresponding data scheduling result; and

a third indication module, configured to: indicate the data scheduling result on a secondary cell on the shared frequency spectrum to the terminal by using scheduling information on a primary cell on an LTE non-shared frequency spectrum, or indicate the data scheduling result on a secondary cell on the shared frequency spectrum to the terminal by using scheduling information on a secondary cell on an LTE shared frequency spectrum, and send the data scheduling result to the first data transmission unit.

23. The apparatus according to claim 19, wherein when the third configuration module is used for configuration, the data scheduling unit comprises:

a third data scheduling module, configured to: perform data scheduling for the terminal according to the data scheduling granularity in the time domain and in the frequency domain on the carrier on the shared specific frequency spectrum of the specific frequency spectrum, or a data scheduling granularity in a time domain and in a frequency domain on the carrier on a non-shared specific frequency spectrum of the specific frequency spectrum, and acquire a corresponding data scheduling result; and

a fourth indication module, configured to: indicate the data scheduling result of the shared specific frequency spectrum to the terminal by using scheduling information on the non-shared specific frequency spectrum; or indicate the data scheduling result of the shared specific frequency spectrum to the terminal by using scheduling information on the shared specific frequency spectrum, and send the data scheduling result to the first data transmission unit.

24. The apparatus according to any one of claims 16 to 23, wherein the data scheduling unit further comprises:

a unified format module, configured to: when data scheduling is performed for the terminal according to different data scheduling granularities, for the first wireless communications system on the specific frequency spectrum, indicated in the option of the data scheduling granularity, use a same resource scheduling field of the scheduling information to represent the data scheduling result.

25. Abase station, comprising:

a memory with a storage medium, wherein the memory stores a program in which a base station side performs data scheduling; and

a processor connected to the memory by using a bus, wherein the processor executes the program by using the data scheduling method according to any one of claims 1 to 12.

**26.** A data scheduling apparatus, applied to a terminal, comprising:

a receiving unit, configured to receive an option of a data scheduling granularity indicated by a base station, wherein the option of the data scheduling granularity comprises a configured data scheduling granularity for a first wireless communications system on a carrier on a specific frequency spectrum, and the specific frequency spectrum comprises a shared specific frequency spectrum and a non-shared specific frequency spectrum; and a second data transmission unit, configured to receive a data scheduling result indicated by the base station, demodulate the data scheduling result according to a demodulation reference signal, and perform data transmission with the base station, wherein resource mapping is performed on the demodulation reference signal according to the configured data scheduling granularity for the first wireless communications system on the specific frequency spectrum.

**27.** The apparatus according to claim 26, wherein the second data transmission unit comprises:

a first receiving module, configured to receive the data scheduling result for the first wireless communications system on the carrier on the specific frequency spectrum according to scheduling information on the shared specific frequency spectrum; or a second receiving module, configured to receive the data scheduling result for the first wireless communications system on the carrier on the specific frequency spectrum according to scheduling information on a carrier on another spectrum than the shared specific frequency spectrum.

**28.** The apparatus according to claim 27, wherein the first receiving module comprises:

a blind detection module, configured to perform blind detection on a physical downlink control channel in at least one OFDM symbol, to acquire the scheduling information on the specific frequency spectrum.

**29.** A terminal, comprising:

a memory with a storage medium, wherein the memory stores a program in which data scheduling is performed on a terminal side; and a processor connected to the memory by using a bus, wherein the processor executes the program by using the data scheduling method according to any one of claims 13 to 15.

Radio Frame = 10 ms

Subframe = 1 ms  Slot = 0.5 ms

| 0 | 1 | 2 | 3 | 4 | 5 | 6 | 7 | 8 | 9 |

| PRB | PRB |
| PRB | PRB |

⋮

| PRB | PRB |

12 subcarriers

One PRB
0.5 ms = 7 symbols

| R1 | R3 | | | R0 | | |
| | | | | | | |
| R0 | R2 | | | R1 | | |
| | | | | | | |
| R1 | R3 | | | R0 | | |
| | | | | | | |
| R0 | R2 | | | R1 | | |

FIG. 1

Subframe

FIG. 2

$T_{OFDM}$

20

MHz

$n * T_{OFDM}$

FIG. 3

LTE
Subframe = 1ms

LTE
WiFi

0 1 2 3 4 5 6 7 8 9

FIG. 4

Configure a data scheduling granularity for a first wireless communications system on a specific frequency spectrum — S101

Indicate an option of the data scheduling granularity on some or all carriers on the specific frequency spectrum to a terminal — S102

Perform data scheduling for the terminal according to the configured data scheduling granularity on the specific frequency spectrum, and indicate a corresponding data scheduling result to the terminal — S103

FIG. 5

FIG. 6

EP 3 051 873 A1

FIG. 7

FIG. 8

FIG. 9

FIG. 10

FIG. 11

$$N_{RB}^{DL}$$

OFDM Symbol

| 0 | 1 | 2 | 3 |
|---|---|---|---|
| 4 | 5 | 6 | 7 |
| 8 | 9 | 10 | 11 |
| 12 | 13 | 14 | 15 |
| 16 | 17 | 18 | 19 |
| 20 | 21 | 22 | 23 |
| 24 | 25 | 26 | 27 |
| 28 | 29 | 30 | 31 |
| 32 | 33 | 34 | 35 |
| 36 | 37 | 38 | 39 |
| 40 | 41 | 42 | 43 |
| 44 | 45 | 46 | 47 |
| 48 | 49 | 50 | 51 |
| 52 | 53 | 54 | 55 |

| 0 | 1 | 2 | 3 | 4 | 5 | ··· | 53 | 54 | 55 |
|---|---|---|---|---|---|-----|----|----|----|

FIG. 12

$N_{RB}^{DL}$

DMRS

Time

1 OFDM Symbol

FIG. 13

Receive an option of a data scheduling granularity indicated by a base station

S301

Receive a data scheduling result indicated by the base station, demodulate the data scheduling result according to a demodulation reference signal, and perform data transmission with the base station

S302

FIG. 14

LTE
Subframe = 1 ms

LTE
WiFi

2    3

FIG. 15

101
102
103

| Configuration unit | — | Indication unit | — | Data scheduling unit |

FIG. 16

600

Base station    602

| Processor | — | Memory |

603    601

FIG. 17

201
202

| Receiving unit | — | Second data transmission unit |

FIG. 18

700

Terminal    702

| Processor | — | Memory |

703    701

FIG. 19

| | INTERNATIONAL SEARCH REPORT | International application No. |
|---|---|---|
| | | **PCT/CN2013/085947** |

**A. CLASSIFICATION OF SUBJECT MATTER**

H04W 28/24 (2009.01) i

According to International Patent Classification (IPC) or to both national classification and IPC

**B. FIELDS SEARCHED**

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: unit, wifi, frequency, LTE, frequency domain, TTI, shared data channel, OFDM, frequency spectrum, schedul+, granularit+, carrier??, subcarrier??, time domain, demodulat+, map+

**C. DOCUMENTS CONSIDERED TO BE RELEVANT**

| Category* | Citation of document, with indication, where appropriate, of the relevant passages | Relevant to claim No. |
|---|---|---|
| X | CN 101547482 A (ZTE CORP.), 30 September 2009 (30.09.2009), description, page 7, paragraph 3 to page 10, paragraph 2 | 1, 16, 25 |
| A | CN 101568155 A (ZTE CORP.), 28 October 2009 (28.10.2009), the whole document | 1-29 |
| A | CN 102255841 A (ZTE CORP.), 23 November 2011 (23.11.2011), the whole document | 1-29 |
| A | CN 102238732 A (ZTE CORP.), 09 November 2011 (09.11.2011), the whole document | 1-29 |
| A | US 2004042460 A1 (GRUHL, S. et al.), 04 March 2004 (04.03.2004), the whole document | 1-29 |

☐ Further documents are listed in the continuation of Box C.　　　☒ See patent family annex.

| | |
|---|---|
| *　　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "E"　earlier application or patent but published on or after the international filing date | "X"　document of particular relevance; the claimed invention cannot be considered novel or cannot be considered to involve an inventive step when the document is taken alone |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| 11 July 2014 (11.07.2014) | **28 July 2014 (28.07.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LUO, Su** Telephone No.: (86-10) **82245577** |

Form PCT/ISA/210 (second sheet) (July 2009)

**INTERNATIONAL SEARCH REPORT**
Information on patent family members

| | International application No. |
|---|---|
| | **PCT/CN2013/085947** |

| Patent Documents referred in the Report | Publication Date | Patent Family | Publication Date |
|---|---|---|---|
| CN 101547482 A | 30 September 2009 | None | |
| CN 101568155 A | 28 October 2009 | None | |
| CN 102255841 A | 23 November 2011 | WO 2011143904 A1 | 24 November 2011 |
| CN 102238732 A | 09 November 2011 | WO 2011134316 A1 | 03 November 2011 |
| | | EP 2509380 A1 | 10 October 2012 |
| | | US 2012287885 A1 | 15 November 2012 |
| US 2004042460 A1 | 04 March 2004 | EP 1376948 A1 | 02 January 2004 |

Form PCT/ISA/210 (patent family annex) (July 2009)